(19) Europäisches Patentamt
European Patent Office
Office européen des brevets

(11) **EP 3 554 118 B1**

(12) **EUROPEAN PATENT SPECIFICATION**

(45) Date of publication and mention
of the grant of the patent:
**01.09.2021  Bulletin 2021/35**

(21) Application number: **17891487.5**

(22) Date of filing: **30.10.2017**

(51) Int Cl.:
*H04W 24/08* (2009.01)        *H04W 72/12* (2009.01)

(86) International application number:
**PCT/CN2017/108347**

(87) International publication number:
**WO 2018/129987 (19.07.2018 Gazette 2018/29)**

(54) **GRANT-FREE TRANSMISSION METHOD, TERMINAL DEVICE AND NETWORK DEVICE**

VERFAHREN FÜR AUTORISIERUNGSFREIE ÜBERTRAGUNG, ENDGERÄTEVORRICHTUNG UND NETZWERKVORRICHTUNG

PROCÉDÉ DE TRANSMISSION SANS AUTORISATION, DISPOSITIF TERMINAL, ET DISPOSITIF DE RÉSEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.01.2017  CN 201710019826**

(43) Date of publication of application:
**16.10.2019  Bulletin 2019/42**

(73) Proprietor: **Huawei Technologies Co., Ltd.**
**Longgang District**
**Shenzhen, Guangdong 518129 (CN)**

(72) Inventors:
• **WU, Yiqun**
  **Shenzhen**
  **Guangdong 518129 (CN)**
• **CHEN, Yan**
  **Shenzhen**
  **Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
**EP-A2- 2 398 294         CN-A- 104 735 785**
**CN-A- 105 101 223        CN-A- 106 211 337**
**US-A1- 2015 271 847**

• **NOKIA ET AL: "Channel structure for contention based access", 3GPP DRAFT; R1-167254, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 21 August 2016 (2016-08-21), XP051125793, Retrieved from the Internet: URL:http://www.3gpp.org/ftp/Meetings_3GPP_SYNC/RAN1/Docs/ [retrieved on 2016-08-21]**
• **INTEL CORPORATION: "Grant-free UL transmissions in NR", 3GPP DRAFT; R1-1609499 GRANT-FREE_NOMA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 1 October 2016 (2016-10-01), XP051159569, Retrieved from the Internet: URL:http://www.3gpp.org/ftp/tsg_ran/WG1_RL 1/TSGR1_86b/Docs/ [retrieved on 2016-10-01]**

**Description**

This application claims priority to Chinese Patent Application No. 201710019826.6, filed with the Chinese Patent Office on January 12, 2017 and entitled "GRANT-FREE TRANSMISSION METHOD, TERMINAL DEVICE, AND NETWORK DEVICE'.

**TECHNICAL FIELD**

This application relates to the communications field, and in particular, to a grant-free transmission method, a terminal device, and a network device in the communications field.

**BACKGROUND**

In a typical wireless communications system such as a long term evolution (Long Term Evolution, LTE) system, a base station notifies, by delivering a control message, user equipment of information about a time-frequency resource used for uplink transmission. Because of different user types, quality of service (QoS) requirements, packet sizes, and channel states, the base station may flexibly configure an appropriate time-frequency resource for the user equipment. For example, when power of an edge user is limited, a narrowband or single carrier transmission scheme may be used to improve a signal-to-noise ratio (Signal-to-Noise Ratio, SNR); and a size of a time-frequency resource allocated to a to-be-transmitted packet may be determined based on a size of the to-be-transmitted packet.

However, in an uplink grant-free access (Grant-Free Access, GFA) mode, because the user equipment performs uplink transmission access independently without a dynamic scheduling instruction and an explicit scheduling instruction of the base station, it is difficult to effectively use radio transmission resources. Therefore, how to effectively determine a time-frequency resource used by the user equipment for grant-free access is a problem that needs to be urgently resolved.

In Channel structure for contention based access" Nokia, Alcatel-Lucent and Shanghai Bell describe contention based multiple access, in which one or multiple resource pools can be configured for a UE for contention based access and different sets of UEs can be configured with different resource pools. A resource pool contains one or multiple resource units, the resource units having different size in time and frequency for different use cases. A preamble is transmitted to indicate contention based transmission. A preamble sequence points to resource unit and the preamble sequence is either transmitted in a preamble zone common to all preambles or within the resource pool configured for the resource unit.

In "Grant-free UL transmissions in NR" Intel Corp. describes that in addition to a preamble, a grant-free UL transmission may further include transmission of a control channel containing information such as MCS, TBS and UE identification.

In EP 2 398 294 A2 a wireless apparatus, a base station and uplink contention methods thereof are provided. The wireless apparatus selects a preamble sequence and at least one resource block on an uplink shared channel (UL-SCH) according to a mapping rule. The wireless apparatus transmits an uplink signal with a preamble sequence on a random access channel (RACH) and a control message on the at least one resource on the UL-SCH to a base station. The base station detects the preamble sequence from the RACH, and retrieves the control message from the at least one resource block on the UL-SCH according to the mapping rule.

**SUMMARY**

The independent and dependent claims of this application provide a grant-free transmission method, a terminal device, and a network device, so that the network device can effectively determine a time-frequency resource selected by the terminal device for performing grant-free transmission.

According to a first aspect, a grant-free transmission method is provided, and the method includes:

determining, by a terminal device, a target time-frequency resource used for grant-free transmission from a plurality of time-frequency resources;
determining, by the terminal device based on information about the target time-frequency resource and a correspondence between a time-frequency resource and a sequence, a sequence corresponding to the target time-frequency resource; and
performing, by the terminal device, the grant-free transmission with a network device on the target time-frequency resource based on the sequence corresponding to the target time-frequency resource.

Therefore, the terminal device indicates, to the network device by using a sequence sent by the terminal device, a time-frequency resource currently used for grant-free access, so that the network device can effectively determine the time-frequency resource selected by the terminal device to perform the grant-free access. In addition, because reuse of a plurality of grant-free transmission resources is supported, effective utilization of radio transmission resources is implemented. Further, a transmission process may be simplified, and complexity of a receiver is reduced.

Optionally, in an implementation of the first aspect, the determining, by a terminal device, a target time-frequency resource used for grant-free transmission from a plurality of time-frequency resources includes:
determining, by the terminal device based on a size of to-be-sent uplink data or a loss status of a path between the terminal device and the network device, the target time-frequency resource used for the grant-free transmission from the plurality of time-frequency resources.

Optionally, in an implementation of the first aspect, the information about the target time-frequency resource includes at least one of the following information: a start location of the target time-frequency resource, a size of a frequency domain resource of the target time-frequency resource, a size of a time domain resource of the target time-frequency resource, or a frequency hopping mode of the terminal device.

Optionally, when a plurality of selectable time-frequency resources, for example, time-frequency resources of a same size but having different start locations, are used for the grant-free transmission, the terminal device may randomly select one of these time-frequency resources as the target time-frequency resource.

In addition, different time-frequency resources used for the grant-free transmission are corresponding to different sequences, and each time-frequency resource may be corresponding to one or more sequences.

Optionally, in an implementation of the first aspect, the performing, by the terminal device, the grant-free transmission with a network device on the target time-frequency resource based on the sequence corresponding to the target time-frequency resource includes: sending, by the terminal device, the sequence to the network device on a time-frequency resource used to send the sequence, and sending uplink data to the network device on the target time-frequency resource.

Optionally, in an implementation of the first aspect, a first location relationship is met between the time-frequency resource of the sequence and the target time-frequency resource, and the first location relationship includes that: the time-frequency resource of the sequence is adjacent to the target time-frequency resource in time domain and is followed by the target time-frequency resource, and includes all or some frequency domain resources of the target time-frequency resource in frequency domain.

Because a specific location relationship is met between the time-frequency resource used to transmit the sequence and the target time-frequency resource used to transmit the uplink data, after receiving the sequence sent by the terminal device, the network device may directly determine, based on a time-frequency resource on which the sequence is received, the time-frequency resource used by the terminal device to transmit the uplink data; that is, the sequence sent by the terminal device implicitly indicates a resource used for uplink grant-free transmission, and no other signaling is required to indicate the resource, thereby reducing signaling overheads in a system.

Optionally, in an implementation of the first aspect, the performing, by the terminal device, the grant-free transmission with a network device on the target time-frequency resource based on the sequence corresponding to the target time-frequency resource includes:

sending, by the terminal device, the sequence to the network device on a time-frequency resource used to send the sequence, and sending a control signal and uplink data to the network device on the target time-frequency resource, where the control signal includes information about a time-frequency resource used to transmit the uplink data.

It should be understood that the uplink data herein refers to service data, and the control signal carries control information other than the uplink data. In this embodiment of this application, the control signal carries the information about the time-frequency resource of the uplink data, such as a start location, bandwidth, and a quantity of timeslots, and if transmission of the uplink data supports frequency hopping, the control signal may further carry a corresponding frequency hopping mode. In addition, the control signal may carry information such as a user identity (Identity, ID), a modulation and coding scheme (Modulation and Coding Scheme, MCS) of data, an interleaving scheme, and a spreading code. The control signal and the uplink data are separately encoded, and the control signal and a data signal may share a same channel or use different channels for transmission.

Optionally, in an implementation of the first aspect, a second location relationship is met between the time-frequency resource of the sequence and a time-frequency resource used to transmit the control signal, and the second location relationship includes that: the time-frequency resource of the sequence is adjacent to the time-frequency resource of the control signal in time domain and is followed by the time-frequency resource of the control signal, and includes all or some frequency domain resources of the time-frequency resource of the control signal in frequency domain.

Because a specific location relationship is met between the time-frequency resource used to transmit the sequence and the time-frequency resource used to transmit the control signal, after receiving the sequence sent by the terminal device, the network device may directly determine, based on the time-frequency resource on which the sequence is received, the time-frequency resource used by the terminal device to transmit the control signal, and determine the resource used for the uplink grant-free transmission based on resource information carried in the control signal; that is, the sequence sent by the terminal device implicitly indicates the resource used for the uplink grant-free transmission, and no other signaling is required to indicate the resource, thereby reducing signaling overheads in the system.

Optionally, in an implementation of the first aspect, the sequence includes a preamble sequence or a reference signal.

According to a second aspect, a grant-free transmission method is provided, and the method includes:

detecting, by a network device, a sequence sent by a terminal device;

determining, by the network device based on the detected sequence, information about a target time-frequency resource used for grant-free transmission; and

detecting, by the network device on the target time-frequency resource, uplink data sent by the terminal device.

In this way, the network device can effectively determine a time-frequency resource used by the terminal device for grant-free access by using information about the sequence sent by the terminal device. Because reuse of a plurality of grant-free transmission resources is supported, effective utilization of radio transmission resources is implemented. Further, a transmission process may be simplified, and complexity of a receiver is reduced.

Optionally, in an implementation of the second aspect, before the detecting, by a network device, a sequence sent by a terminal device, the method further includes: determining, by the network device based on signal power, whether the terminal device sends the sequence; and when determining that the terminal device sends the sequence, detecting the sequence sent by the terminal device.

Using a preamble sequence as an example, a received signal of each resource unit is $y = [y_1, y_2, ..., y_k]^T$, a to-be-detected preamble sequence is $x = [x_1, x_2, ..., x_k]^T$, where $[...]^T$ represents transposition of a vector or a matrix. Then, the network device may calculate, according to a formula (1), signal power corresponding to the preamble sequence, and determine, by comparing the signal power with a preset power threshold, whether the terminal device sends the preamble sequence. If one or more preamble sequences are detected, the uplink data sent by the terminal device is further detected in a target time-frequency resource corresponding to the preamble sequence or target time-frequency resources corresponding to the plurality of preamble sequences; or if no preamble sequence is detected, no subsequent detection is performed.

$$P = \left| x^T y \right|^2 = \left| \sum_{i=1}^{k} x_i y_i \right|^2 \qquad (1)$$

Optionally, in an implementation of the second aspect, the information about the target time-frequency resource includes at least one of the following information: a start location of the target time-frequency resource, a size of a frequency domain resource of the target time-frequency resource, a size of a time domain resource of the target time-frequency resource, or a frequency hopping mode of the terminal device.

Optionally, in an implementation of the second aspect, the determining, by the network device based on the detected sequence, information about a target time-frequency resource used for grant-free transmission includes: determining, by the network device, the information about the target time-frequency resource based on the sequence and a correspondence between a sequence and a time-frequency resource.

Optionally, in an implementation of the second aspect, a first location relationship is met between the time-frequency resource of the sequence and the target time-frequency resource, and the first location relationship includes that: the time-frequency resource of the sequence is adjacent to the target time-frequency resource in time domain and is followed by the target time-frequency resource, and includes all or some frequency domain resources of the target time-frequency resource in frequency domain.

Because a specific location relationship is met between the time-frequency resource used to transmit the sequence and the target time-frequency resource used to transmit the uplink data, after receiving the sequence sent by the terminal device, the network device may directly determine, based on a time-frequency resource on which the sequence is received, the time-frequency resource used by the terminal device to transmit the uplink data; that is, the sequence sent by the terminal device implicitly indicates a resource used for uplink grant-free transmission, and no other signaling is required to indicate the resource, thereby reducing signaling overheads in a system.

Optionally, in an implementation of the second aspect, the determining, by the network device based on the detected sequence, information about a target time-frequency resource used for grant-free transmission includes: determining, by the network device based on a time-frequency resource used to transmit the sequence, a time-frequency resource that is in the target time-frequency resource and that is used to transmit a control signal, and receiving, on the time-frequency resource of the control signal, the control signal sent by the terminal device, where the control signal includes information about a time-frequency resource that is in the target time-frequency resource and that is used to transmit the uplink data; and determining, by the network device based on the control signal, the time-frequency resource that is in the target time-frequency resource and that is used to transmit the uplink data; and

the detecting, by the network device on the target time-frequency resource, uplink data sent by the terminal device includes: detecting, by the network device on the time-frequency resource that is in the target time-frequency resource and that is used to transmit the uplink data, the uplink data sent by the terminal device.

Optionally, in an implementation of the second aspect, a second location relationship is met between the time-frequency resource of the sequence and the time-frequency resource of the control signal, and the second location relationship includes that: the time-frequency resource of the sequence is adjacent to the time-frequency resource of the control signal in time domain and is followed by the time-frequency resource of the control signal, and includes all or some frequency domain resources of the time-frequency resource of the control signal in frequency domain.

In an implementation process, to simplify the design, a location of the time-frequency resource CR of the control signal and a location of the time-frequency resource of the sequence may be agreed upon in advance. For example, it may be agreed that the time-frequency resource of the sequence is adjacent to the CR in time domain and is followed by the CR, bandwidth of the time-frequency resources of the sequence is the same as bandwidth of the CR, and a quantity of timeslots of the CR is related to the bandwidth of the CR, that is, may be determined by the bandwidth of the CR. Then, the network device may directly determine a start location and the bandwidth of the CR based on a time-frequency resource of a detected preamble sequence, and determine the quantity of timeslots of the CR based on the bandwidth of the CR, and may further determine, in the control signal in the CR, a start location, bandwidth, and a quantity of timeslots of a time-frequency resource DR of the uplink data. If it is also agreed that the CR is adjacent to the DR, the start location and the quantity of timeslots of the CR directly determine the start location of the DR, and the control signal may not include the start location of the DR. If it is also agreed that the bandwidth of the CR and DR is the same, the control message does not need to carry bandwidth information of the DR. If transmission bandwidth of the DR includes only a possible quantity of timeslots of the DR, the control message does not need to indicate the quantity of timeslots of the DR. When data transmission supports the frequency hopping, the control messages may also indicate a frequency hopping mode of the data transmission.

Because a specific location relationship is met between the time-frequency resource used to transmit the sequence and the time-frequency resource used to transmit the control signal, after receiving the sequence sent by the terminal device, the network device may directly determine, based on the time-frequency resource on which the sequence is received, the time-frequency resource used by the terminal device to transmit the control signal, and determine the resource used for the uplink grant-free transmission based on resource information carried in the control signal; that is, the sequence sent by the terminal device implicitly indicates the resource used for the uplink grant-free transmission, and no other signaling is required to indicate the resource, thereby reducing signaling overheads in the system.

Optionally, in an implementation of the second aspect, the sequence includes a preamble sequence or a reference signal.

According to a third aspect, a terminal device is provided, and the terminal device may be configured to perform the processes performed by the terminal device in the grant-free transmission method in the first aspect and in the implementations of the first aspect. The network device includes a determining unit and a transmission unit. The determining unit is configured to determine a target time-frequency resource used for the grant-free transmission from a plurality of time-frequency resources. The determining unit is further configured to determine, based on information about the target time-frequency resource and a correspondence between a time-frequency resource and a sequence, a sequence corresponding to the target time-frequency resource. The transmission unit is configured to perform the grant-free transmission with a network device on the target time-frequency resource based on the sequence that is determined by the determining unit and that is corresponding to the target time-frequency resource.

According to a fourth aspect, a network device is provided, and the network device may be configured to perform the processes performed by the network device in the grant-free transmission method in the second aspect and in the implementations of the second aspect. The network device includes a detection unit and a determining unit. The detection unit is configured to detect a sequence sent by a terminal device. The determining unit is configured to determine, based on the sequence detected by the detection unit, information about a target time-frequency resource used for the grant-free transmission. The detection unit is further configured to detect, on the target time-frequency resource determined by the determining unit, uplink data sent by the terminal device.

According to a fifth aspect, a terminal device is provided, and the terminal device includes a processor, a transceiver, and a memory. The memory stores a program, and the processor executes the program to perform the processes performed by the terminal device in the grant-free transmission method in the first aspect and in the implementations of the first aspect. The processor is specifically configured to: determine a target time-frequency resource used for the grant-free transmission from a plurality of time-frequency resources; and determine, based on information about the target time-frequency resource and a correspondence between a time-frequency resource and a sequence, a sequence corresponding to the target time-frequency resource. The transceiver is specifically configured to perform the grant-free transmission with a network device on the target time-frequency resource based on the sequence that is determined by the processor and that is corresponding to the target time-frequency resource.

According to a sixth aspect, a network device is provided, and the network device includes a processor, a transceiver, and a memory. The memory stores a program, and the processor executes the program to perform the processes performed by the network device in the grant-free transmission method in the second aspect and in the implementations of the second aspect. The processor is configured to: detect a sequence sent by a terminal device; determine, based on the detected sequence, information about a target time-frequency resource used for the grant-free transmission; and detect, on the determined target time-frequency resource, uplink data sent by the terminal device.

According to a seventh aspect, a computer readable storage medium is provided, and the computer readable storage medium stores a program, where the program enables a terminal device to perform any one of the grant-free transmission methods in the first aspect and the implementations of the first aspect.

According to an eighth aspect, a computer readable storage medium is provided, and the computer readable storage medium stores a program, where the program enables a network device to perform any one of the grant-free transmission methods in the second aspect and the implementations of the second aspect.

According to a ninth aspect, a system chip is provided, and the system chip includes an input interface, an output interface, a processor, and a memory, where the processor is configured to execute an instruction stored in the memory, and when the instruction is executed, the processor may implement any one of the methods in the first aspect or the implementations of the first aspect.

According to a tenth aspect, a system chip is provided, and the system chip includes an input interface, an output interface, a processor, and a memory, where the processor is configured to execute an instruction stored in the memory, and when the instruction is executed, the processor may implement any one of the methods in the second aspect or the implementations of the second aspect.

Based on the method in the embodiments of this application, the network device can determine, by using the information about the sequence sent by the terminal device, the time-frequency resource used by the terminal device for the grant-free access, so that effective utilization of the radio transmission resources is implemented. Because reuse of a plurality of grant-free transmission resources is supported, transmission resources are saved, and utilization of the time-frequency resource is improved. Further, a transmission process may be simplified, and complexity of a receiver is reduced.

## BRIEF DESCRIPTION OF DRAWINGS

FIG. 1 is a schematic diagram of an application scenario according to an embodiment of this application;
FIG. 2 is a schematic diagram of an uplink grant-free transmission method in the prior art;
FIG. 3 is a schematic interaction diagram of a grant-free transmission method according to an embodiment of this application;
FIG. 4 is a schematic diagram of a time-frequency resource used for grant-free transmission according to an embodiment of this application;
FIG. 5 is a schematic diagram of a time-frequency resource used for grant-free transmission according to an embodiment of this application;
FIG. 6 is a schematic diagram of a time-frequency resource used for grant-free transmission according to an embodiment of this application;
FIG. 7 is a schematic diagram of a time-frequency resource used for grant-free transmission according to an embodiment of this application;
FIG. 8 is a schematic diagram of a time-frequency resource used for grant-free transmission according to an embodiment of this application;
FIG. 9 is a schematic diagram of a time-frequency resource used for grant-free transmission according to an embodiment of this application;
FIG. 10 is a schematic block diagram of a terminal device according to an embodiment of this application;
FIG. 11 is a schematic structural diagram of a terminal device according to an embodiment of this application;
FIG. 12 is a schematic block diagram of a network device according to an embodiment of this application;
FIG. 13 is a schematic structural diagram of a network device according to an embodiment of this application; and
FIG. 14 is a schematic structural diagram of a system chip according to an embodiment of this application.

## DESCRIPTION OF EMBODIMENTS

The following describes technical solutions of this application with reference to accompanying drawings.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As shown in figures, both a computing device and an application that runs on a computing device may be components. One or more components may reside within a process and/or a thread of execution, and a component may be located on one computer and/or distributed between two or more computers. In addition, these components may be executed by various computer-readable media that store various data structures. For example, the components may communicate by using a local and/or remote process and according to, for example, a signal having one or more data packets (for example, data from two components interacting with another component in a local system, a distributed system, and/or across a network such as the Internet interacting with other systems by using the signal).

It should be understood that the technical solutions in the embodiments of this application may be applied to various communications systems, such as: a global system for mobile communications (Global System for Mobile Communications, GSM) system, a code division multiple access (Code Division Multiple Access, CDMA) system, a wideband code division multiple access (Wideband Code Division Multiple Access, WCDMA) system, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), and a future 5G communications system, or the like.

This application describes the embodiments with reference to a terminal device. The terminal device may be referred to user equipment (User Equipment, UE), an access terminal, a subscriber unit, a subscriber station, a mobile station, a mobile console, a remote station, a remote terminal, a mobile device, a user terminal, a terminal, a wireless communication device, a user agent, a user apparatus. An access terminal may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, an in-vehicle device, a wearable device, a terminal device in a future 5G network, or a terminal device in a future evolved PLMN network.

This application describes the embodiments with reference to a network device. The network device may be a device configured to communicate with the terminal device, for example, may be a base transceiver station (Base Transceiver Station, BTS) in a GSM system or a CDMA system, may be a NodeB (NodeB, NB) in a WCDMA system, or may be an evolved NodeB (Evolved NodeB, eNB or eNodeB) in an LTE system. Alternatively, the network device may be a relay station, an access point, an in-vehicle device, a wearable device, a network side device in the future 5G network, a network device in the future evolved PLMN network, or the like.

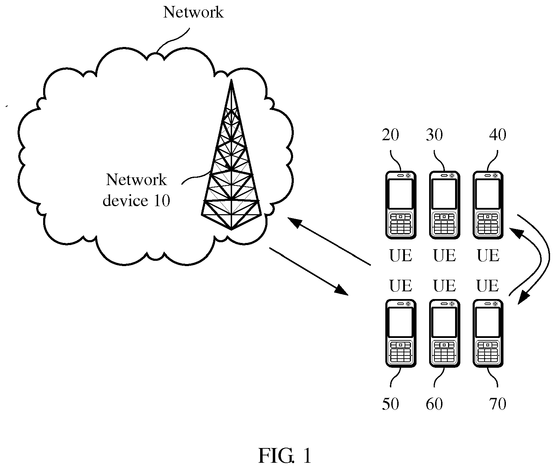

FIG. 1 is a schematic architectural diagram of a communications system to which an embodiment of this application is applied. As shown in FIG. 1, the communications system may include a network device 10 and a terminal device 20 to a terminal device 70 (referred to as UE in the figure), where the network device and the terminal device are connected in a wireless manner, a wired manner, or another manner. The terminal device 20 to the terminal device 70 may communicate with the network device 10 in a grant-free access manner.

A network in the embodiments of this application may be a public land mobile network (Public Land Mobile Network, PLMN), a device-to-device (Device-to-Device, D2D) network, a machine-to-machine/man (Machine-to-Machine/Man, M2M) network, or another network. FIG. 1 is merely a simplified schematic diagram used as an example, and the network may further include another network device that is not shown in FIG. 1.

The solutions provided in the embodiments of this application may be applied to grant-free access, and the grant-free access herein may also be referred to as grant-free (Grant-free) transmission. The grant-free transmission may support a plurality of services in a future network, such as a machine type communication (Machine Type Communication, MTC) service or an ultra-reliable and low latency communication (Ultra-Reliable and Low Latency Communication, URLLC) service, so as to meet service transmission requirements for a low latency and high reliability. The grant-free transmission may be specific to uplink data transmission. A person skilled in the art may know that the grant-free access may also have another name, such as spontaneous access, spontaneous multiple access, or contention-based multiple access.

In the embodiments of this application, the data may include service data or signaling data. Transmission resources used for the grant-free transmission may include but are not limited to any one of or a combination of a plurality of the following resources: a time domain resource, such as a radio frame, a subframe, or a symbol; a frequency domain resource, such as a subcarrier or a resource block; a space domain resource, such as a transmit antenna or a beam; a code domain resource, such as a sparse code multiple access (Sparse Code Multiple Access, SCMA) codebook group, a low density signature (Low Density Signature, LDS) group, or a CDMA code group; an uplink pilot resource; an interleaving resource; or a channel coding scheme.

Transmission may be performed on the foregoing transmission resources according to control mechanisms that include but are not limited to the following: uplink power control, such as uplink transmit power upper limit control; modulation and coding scheme setting, such as transport block size setting, code rate setting, or modulation order setting; a retransmission mechanism, such as a hybrid automatic repeat request (Hybrid Automatic Repeat Request, HARQ); and the like.

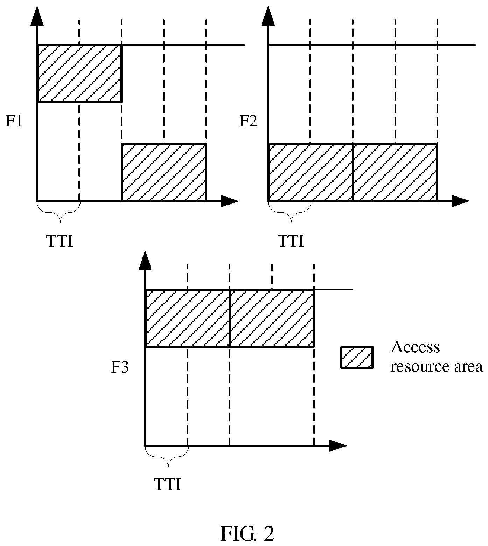

FIG. 2 is a schematic diagram of an uplink grant-free transmission method in the prior art. As shown in FIG. 2, a base station is preconfigured with a plurality of time-frequency resource blocks of different sizes for uplink grant-free transmission. The time-frequency resource blocks are independent of each other, and each time-frequency resource block may occupy at least one transmission time interval (Transmission Time Interval, TTI). The three parts in FIG. 2 respectively show three time-frequency resources of different sizes that are preconfigured for the base station for the uplink grant-free transmission. However, in this method, utilization of the time-frequency resource is very low when there are many types of user equipment but a quantity of user equipment is small. In addition, when receiving data, the base station needs to detect the data separately on each time-frequency resource block, and consequently, processing complexity is high.

In the embodiments of this application, the network device may determine, by using information about a sequence sent by the user equipment, a time-frequency resource used by the user equipment for grant-free access, so that effective utilization of radio transmission resources can be implemented.

It should be understood that a preamble sequence (preamble) mentioned in the embodiments of this application may also be referred to as a preamble. For example, the preamble sequence may be a ZC (Zadoff Chu) sequence, a pseudo noise (Pseudo Noise, PN) sequence, a longest linear shift register sequence (M sequence for short, that is, a basic PN sequence used in a CDMA system), a Walsh sequence, or the like. A reference signal (Reference Signal, RS) mentioned in the embodiments of this application may also be referred to as a pilot signal, and is a signal provided by a transmit end for a receive end for channel estimation, channel detection, or channel state detection.

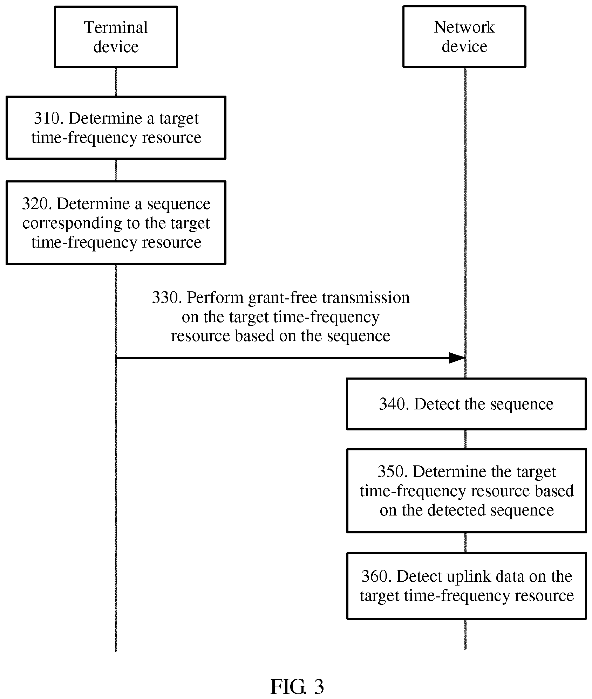

FIG. 3 is a schematic interaction diagram of a grant-free transmission method according to an embodiment of this application. In the method shown in FIG. 3, a transmit end of a sequence, data, or the like may be a terminal device or a network device, and a receive end of the sequence, the data, or the like may be a terminal device or a network device.

The following uses an example in which the transmit end of the sequence, the data, or the like is a terminal device and the receive end is a network device for description. However, this embodiment of this application is not limited thereto. For example, the transmit end of the sequence, the data, or the like is a terminal device, and the receive end of the sequence, the data, or the like is another terminal device, and in this case, the method in this embodiment of this application may be applied to D2D transmission.

FIG. 3 shows a network device and a terminal device. For example, the network device may be a network device 10 in FIG. 1, and the terminal device may be any one of a terminal device 20 to a terminal device 70 in FIG. 1. Only one terminal device is used as an example for description herein. However, grant-free transmission may be performed between the network device and a plurality of terminal devices that include the terminal device by using the method in this embodiment of this application. For a method performed by another terminal device, refer to the method performed by the terminal device shown in FIG. 3. For brevity, details are not described herein again. Optionally, the method may be applied to the grant-free transmission, or may be applied to another scenario. An example in which the method is applied to the grant-free transmission is used for description herein; that is, uplink transmission performed between the terminal device and the network device is the grant-free transmission, and a used transmission resource is a grant-free transmission resource. As shown in FIG. 3, the grant-free transmission method includes the following steps.

In step 310, a terminal device determines a target time-frequency resource used for current grant-free transmission from a plurality of time-frequency resources.

Specifically, when performing uplink grant-free access, the terminal device first needs to select the target time-frequency resource used to perform the uplink grant-free access, for example, determine the following information about the target time-frequency resource: a start location, occupied bandwidth, a quantity of timeslots, and the like. The terminal device may determine the target time-frequency resource used for the current grant-free transmission from the plurality of preconfigured time-frequency resources.

For example, the terminal device may determine, based on a size of to-be-sent uplink data, the target time-frequency resource used for the grant-free transmission from the plurality of time-frequency resources; or the terminal device may determine, based on a loss status of a path between the terminal device and the network device, the target time-frequency resource used for the grant-free transmission from the plurality of time-frequency resources; or the terminal device may determine the target time-frequency resource based on other information. This is not limited in this embodiment of this application.

Optionally, when a plurality of selectable time-frequency resources, for example, time-frequency resources of a same size but having different start locations, are used for the grant-free transmission, the terminal device may randomly select one of these time-frequency resources as the target time-frequency resource.

In step 320, the terminal device determines, based on information about the target time-frequency resource and a correspondence between a time-frequency resource and a sequence, a sequence corresponding to the target time-frequency resource.

Optionally, the information about the target time-frequency resource includes at least one of the following information: a start location of the target time-frequency resource, a size of a frequency domain resource of the target time-frequency resource, a size of a time domain resource of the target time-frequency resource, or a frequency hopping mode of the terminal device.

After determining the target time-frequency resource used for the grant-free transmission, the terminal device may determine, based on the information about the target time-frequency resource and the preset correspondence between the time-frequency resource and the sequence, the sequence that is corresponding to the target time-frequency resource and that is used for the grant-free transmission. Different time-frequency resources used for the grant-free transmission are corresponding to different sequences, and each time-frequency resource may be corresponding to one or more sequences.

The correspondence between the time-frequency resource and the sequence may be presented in a form such as a table, a formula, or an image; and in the correspondence, one time-frequency resource may be corresponding to one or more sequences, or one sequence may be corresponding to one or more time-frequency resources. That is, the terminal device may determine, by searching a preset table that includes correspondences between the plurality of time-frequency resources and the plurality of sequences, the sequence corresponding to the target time-frequency resource; or the terminal device may calculate, by using a preset formula and related parameter information of the target time-frequency resource, an identifier or a number of the sequence corresponding to the target time-frequency resource. This is not limited in this application.

Optionally, the sequence corresponding to the target time-frequency resource includes a preamble sequence, or includes a reference signal such as a pilot sequence.

In this embodiment of this application, the time-frequency resource used for the grant-free transmission may also be referred to as a grant-free access region (Grant-free Access Region, GFAR).

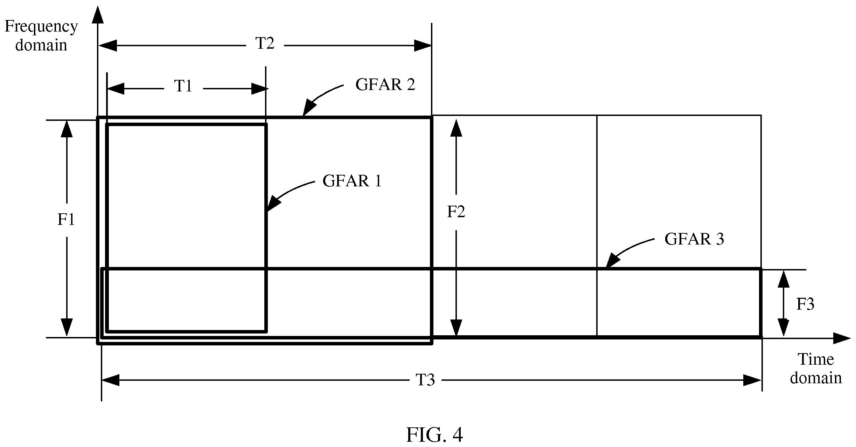

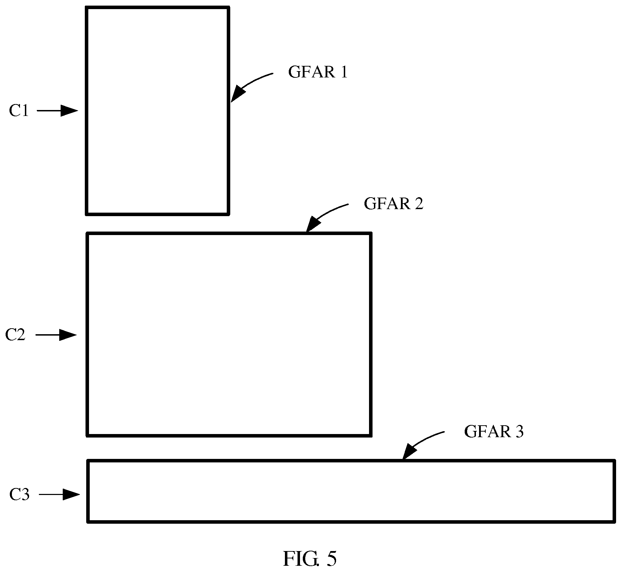

FIG. 4 and FIG. 5 are used as an example to describe the correspondence between the time-frequency resource and the sequence. The correspondence may be determined and notified to the terminal device by the network device, or may be jointly negotiated and agreed upon by the network device and the terminal device, for example, may be a correspondence specified in a protocol. FIG. 4 and FIG. 5 show three time-frequency resources used for the grant-free transmission, where a first time-frequency resource (a GFAR 1), a second time-frequency resource (a GFAR 2), and a third time-frequency resource (a GFAR 3) have a same start location in time domain. Bandwidth F1 of the first time-frequency resource is the same as bandwidth F2 of the second time-frequency resource, and bandwidth of the third time-frequency resource is F3. A quantity T2 of timeslots of the second time-frequency resource is twice as large as a quantity T1 of timeslots of the first time-frequency resource, and a quantity T3 of timeslots of the third time domain resource is four times as large as the quantity T1 of timeslots of the first time domain resource.

More generally, at least one GFAR unit may be defined, and each GFAR unit has specific bandwidth, a specific quantity of timeslots, and the like. A GFAR used by the terminal device may include at least one GFAR unit.

It is assumed that the correspondence between the time-frequency resource used for the grant-free transmission and the sequence is shown in FIG. 5. Using a preamble sequence as an example, it can be seen from FIG. 5 that the first time-frequency resource is corresponding to a preamble sequence C1, the second time-frequency resource is corresponding to a preamble sequence C2, and the third time-frequency resource is corresponding to a preamble sequence C3. In other words, the preamble sequences C1, C2, and C3 are respectively corresponding to GFARs of different sizes. Generally, preamble sequences corresponding to different GFARs have a same length. However, in this embodiment of this application, different GFARs may also be corresponding to several groups of preamble sequences having different lengths, and this is not limited herein.

When the terminal device determines, based on information such as the size of the to-be-sent uplink data or a link loss status of the terminal device, that the target time-frequency resource is the first time-frequency resource, the terminal device uses the preamble sequence C1 to perform the grant-free transmission with the network device on the first time-frequency resource; or if the terminal device determines that the target time-frequency resource used by the terminal device is the second time-frequency resource, the terminal device uses the preamble sequence C2 to perform the grant-free transmission with the network device on the second time-frequency resource; or if the terminal device determines that the target time-frequency resource used by the terminal device is the third time-frequency resource, the terminal device uses the preamble sequence C3 to perform the grant-free transmission with the network device on the third time-frequency resource. The preamble sequences C1, C2, and C3 may be ZC sequences commonly used in an LTE system, or may be PN sequences, M sequences, Walsh sequences, or the like.

If the terminal device supports frequency hopping, the information about the target time-frequency resource may further include the frequency hopping mode used by the terminal device. Using a frame structure of the LTE system as an example, an orthogonal frequency division multiplexing (Orthogonal Frequency Division Multiplexing, OFDM) technology is used at a physical layer, bandwidth includes a specific quantity of subcarriers, and each timeslot includes a specific quantity of time domain symbols such as OFDM symbols. Each cell may define GFARs of different quantities and sizes, and the network device may instruct the terminal device to configure the foregoing GFARs by using, for example, a broadcast message or a control message.

In step 330, the terminal device performs the grant-free transmission with a network device on the target time-frequency resource based on the sequence.

When the terminal device determines the target time-frequency resource and the sequence (for example, the preamble sequence or the pilot sequence) that are used for the current grant-free transmission, the terminal device sends the uplink data to the network device on the target time-frequency resource based on the sequence.

Optionally, when performing the grant-free transmission with the network device, the terminal device may send the sequence to the network device on a time-frequency resource used to send the sequence, and send the uplink data to the network device on the target time-frequency resource. Optionally, a first location relationship is met between the time-frequency resource of the sequence and the target time-frequency resource, and the first location relationship may include that: the time-frequency resource of the sequence is adjacent to the target time-frequency resource in time domain and is followed by the target time-frequency resource, and includes all or some frequency domain resources of the target time-frequency resource in frequency domain.

Optionally, the terminal device may send the sequence to the network device on the time-frequency resource of the sequence, and send a control signal and the uplink data to the network device on the target time-frequency resource, where the control signal includes information about a time-frequency resource used to transmit the uplink data. Optionally, a second location relationship is met between the time-frequency resource of the sequence and the time-frequency resource used to transmit the control signal, and the second location relationship may include that: the time-frequency resource of the sequence is adjacent to the time-frequency resource of the control signal in time domain and is followed by the time-frequency resource of the control signal, and includes all or some frequency domain resources of the time-frequency resource of the control signal in frequency domain.

In step 340, the network device detects a sequence sent by the terminal device.

Optionally, before the network device detects the sequence sent by the terminal device, the method may further include: determining, by the network device based on signal power, whether the terminal device sends the sequence, and when the network device determines that the terminal device sends the sequence, detecting the sequence sent by the terminal device.

Specifically, when receiving a signal, the network device may first determine, based on the signal power, whether the terminal device sends the sequence. Using the preamble sequence as an example, a received signal of each resource unit is $y = [y_1, y_2, ..., y_k]^T$, and a to-be-detected preamble sequence is $x = [x_1, x_2, ..., x_k]^T$, where $[...]^T$ represents transposition of a vector or a matrix. Then, the network device may calculate, according to a formula (1), signal power corresponding to the preamble sequence, and determine, by comparing the signal power with a preset power threshold, whether the terminal device sends the preamble sequence. If one or more preamble sequences are detected, the uplink data sent by the terminal device is further detected in a GFAR corresponding to the preamble sequence or GFARs corresponding to the plurality of preamble sequences; or if no preamble sequence is detected, no subsequent detection is performed.

$$P = \left| x^T y \right|^2 = \left| \sum_{i=1}^{k} x_i y_i \right|^2 \qquad (1)$$

In step 350, the network device determines, based on the detected sequence, the information about the target time-frequency resource used for the grant-free transmission.

Specifically, two manners may be used by the network device to determine the information about the target time-frequency resource used for the grant-free transmission. One is to directly determine a corresponding target time-frequency resource based on the detected preamble sequence, and the other is to determine the information about the target time-frequency resource based on the control signal sent by the terminal device and the preamble sequence.

The following describes in detail how the network device determines, in the two manners, the information about the target time-frequency resource used for the grant-free transmission.

Manner 1

Optionally, that, in step 350, the network device determines, based on the detected sequence, the information about the target time-frequency resource used for the grant-free transmission includes: determining, by the network device, the information about the target time-frequency resource based on the sequence and the correspondence between the sequence and the time-frequency resource.

Specifically, after detecting the sequence, the network device may determine, based on the correspondence between the sequence and the time-frequency resource, the information about the target time-frequency resource used to receive the uplink data of the terminal device. For example, the network device may determine, based on the detected sequence and the correspondence, shown in FIG. 4 and FIG. 5, between the sequence and the time-frequency resource, the target time-frequency resource used to detect the uplink data. For example, if the network device detects the preamble sequence C1, the uplink data sent by the terminal device is detected on the first time-frequency resource corresponding to the preamble sequence C1, that is, the GFAR 1; or if the network device detects the preamble sequence C2, the uplink data sent by the terminal device is detected on the second time-frequency resource corresponding to the preamble sequence C2, that is, the GFAR 2; or if the network device detects the preamble sequence C3, the uplink data sent by the terminal device is detected on the third time-frequency resource corresponding to the preamble sequence C3, that is, the GFAR 3.

Optionally, the first location relationship is met between the time-frequency resource used to transmit the sequence and the target time-frequency resource, for example, the first location relationship may be that: the time-frequency resource of the sequence is adjacent to the target time-frequency resource in time domain and is followed by the target time-frequency resource, and includes all or some frequency domain resources of the target time-frequency resource in frequency domain.

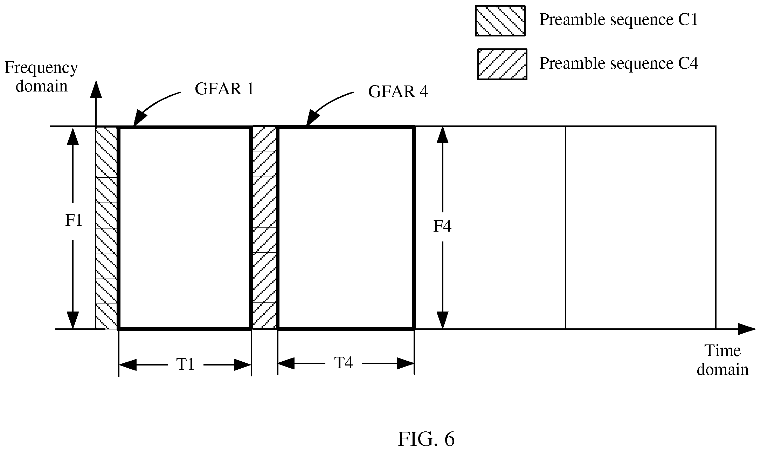

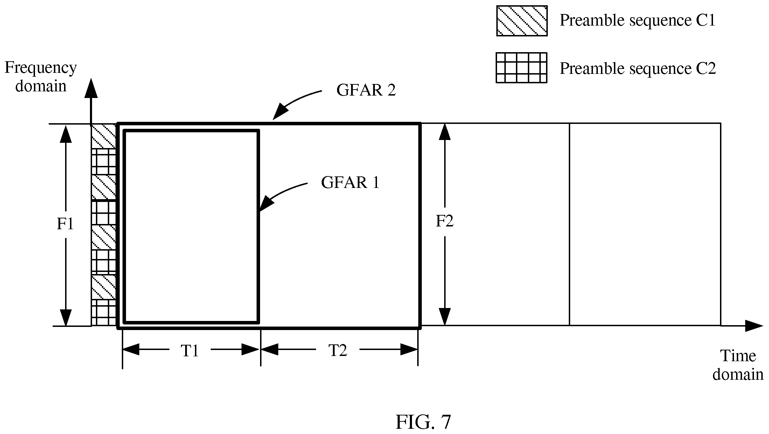

With reference to FIG. 6 and FIG. 7, the following uses two detailed examples to illustrate the first location relationship that is met between the time-frequency resource used by the terminal device to send the sequence and the target time-frequency resource.

As shown in FIG. 6 that is a schematic diagram of the time-frequency resource used for the grant-free transmission, the first location relationship that is met between the time-frequency resource used to transmit the sequence and the target time-frequency resource is that: the time-frequency resource of the sequence is adjacent to the target time-frequency resource in time domain and is followed by the target time-frequency resource, and includes all frequency domain resources of the target time-frequency resource in frequency domain. FIG. 6 shows the first time-frequency resource and a fourth time-frequency resource. The bandwidth $F1$ of the first time-frequency resource is equal to bandwidth $F4$ of the fourth time-frequency resource, the quantity $T1$ of timeslots of the first time-frequency resource is equal to a quantity $T4$ of timeslots of the fourth time-frequency resource, and the start location of the first time-frequency resource comes before a start location of the fourth time-frequency resource.

If the terminal device determines that the target time-frequency resource is the first time-frequency resource, that is, the GFAR 1, the preamble sequence determined by the terminal device based on the GFAR 1 is the C1, and the terminal device sends the preamble sequence C1 to the network device at a location of a time-frequency resource of the preamble sequence C1 as shown in FIG. 6, and sends the uplink data to the network device on the GFAR 1. Then, if the network device detects the preamble sequence C1 on the time-frequency resource of the preamble sequence C1, the network device detects, on the first time-frequency resource corresponding to the preamble sequence C1 based on the preamble sequence C1, the uplink data sent by the terminal device.

If the terminal device determines that the target time-frequency resource is the fourth time-frequency resource, that is, the GFAR 4, the preamble sequence determined by the terminal device based on the GFAR 4 is the C4, and the terminal device sends the preamble sequence C4 to the network device at a location of the time-frequency resource of the preamble sequence C4 as shown in FIG. 6, and sends the uplink data to the network device on the GFAR 4. Then, if the network device detects the preamble sequence C4 on the time-frequency resource of the preamble sequence C4, the network device detects, on the fourth time-frequency resource corresponding to the preamble sequence C4 based on the preamble sequence C4, the uplink data sent by the terminal device.

As shown in FIG. 7 that is a schematic diagram of the time-frequency resource used for the grant-free transmission, the first location relationship that is met between the time-frequency resource used to transmit the sequence and the target time-frequency resource is that: the time-frequency resource of the sequence is adjacent to the target time-frequency resource in time domain and is followed by the target time-frequency resource, and includes some frequency domain resources of the target time-frequency resource in frequency domain. FIG. 7 shows the first time-frequency resource and the second time-frequency resource, the bandwidth $F1$ of the first time-frequency resource is equal to the bandwidth $F2$ of the second time-frequency resource, and the quantity $T2$ of timeslots included in the second time-frequency resource is twice as large as the quantity $T1$ of timeslots of the first time-frequency resource, and the start location of the first time-frequency resource is the same as the start location of the second time-frequency resource.

If the terminal device determines that the target time-frequency resource is the first time-frequency resource, that is, the GFAR 1, the preamble sequence determined by the terminal device based on the GFAR 1 is the C1, and the terminal device sends the preamble sequence C1 to the network device at a location of the time-frequency resource of the preamble sequence C1 as shown in FIG. 7, and sends the uplink data to the network device on the GFAR 1. Then, if the network device detects the preamble sequence C1 on the time-frequency resource of the preamble sequence C1, the network device detects, on the first time-frequency resource corresponding to the preamble sequence C1 based on the preamble sequence C1, the uplink data sent by the terminal device.

If the terminal device determines that the target time-frequency resource is the second time-frequency resource, that is, the GFAR 2, the preamble sequence determined by the terminal device based on the GFAR 2 is the C2, and the terminal device sends the preamble sequence C2 to the network device at a location of the time-frequency resource of the preamble sequence C2 as shown in FIG. 7, and sends the uplink data to the network device on the GFAR 2. Then, if the network device detects the preamble sequence C2 on the time-frequency resource of the preamble sequence C2, the network device detects, on the second time-frequency resource corresponding to the preamble sequence C2 based on the preamble sequence C2, the uplink data sent by the terminal device.

It can be learned that, when being transmitted, the preamble sequence C1 corresponding to the first time-frequency resource and the preamble sequence C2 corresponding to the second time-frequency resource occupy a same symbol, but a time-frequency resource used to transmit a preamble sequence includes some frequency domain resources of the target time-frequency resource in frequency domain. In the symbol, frequency domain resources used for transmitting the preamble sequence C1 and the preamble sequence C2 are cross-distributed in frequency domain.

Because a specific location relationship is met between the time-frequency resource used to transmit the sequence and the target time-frequency resource used to transmit the uplink data, after receiving the sequence sent by the terminal device, the network device may directly determine, based on a time-frequency resource on which the sequence is received, the time-frequency resource used by the terminal device to transmit the uplink data; that is, the sequence sent by the terminal device implicitly indicates a resource used for uplink grant-free transmission, and no other signaling is required to indicate the resource, thereby reducing signaling overheads in a system.

Manner 2

Optionally, that the network device determines, based on the detected sequence, the information about the target time-frequency resource used for the grant-free transmission includes: determining, by the network device based on the time-frequency resource used to transmit the sequence, a time-frequency resource that is in the target time-frequency resource and that is used to transmit the control signal, and receiving, on the time-frequency resource of the control signal, the control signal sent by the terminal device; and determining, by the network device based on the control signal, the time-frequency resource that is in the target time-frequency resource and that is used to transmit the uplink data.

Optionally, the second location relationship is met between the time-frequency resource used to transmit the sequence and the time-frequency resource of the control signal, and the control signal includes the information about the time-frequency resource that is in the target time-frequency resource and that is used to transmit the uplink data.

Specifically, the terminal device sends the sequence to the network device on the time-frequency resource of the sequence, and sends the control signal and the uplink data to the network device on the target time-frequency resource. The network device determines, based on the time-frequency resource of the sequence, the time-frequency resource that is in the target time-frequency resource and that is used to transmit the control signal, and receives, on the time-frequency resource of the control signal, the control signal sent by the terminal device. Because the control signal carries the information, such as a start location, bandwidth, a quantity of timeslots, and the frequency hopping mode, about the time-frequency resource that is in the target time-frequency resource and that is used to transmit the uplink data, the network device receives the control signal, and determines, based on the control signal, the time-frequency resource that is in the target time-frequency resource and that is used to transmit the uplink data. In this case, the network device may detect the uplink data sent by the terminal device on the time-frequency resource that is in the target time-frequency resource and that is used to transmit the uplink data.

Herein, the time-frequency resource of the control signal may be referred to as a control region (Control Region, CR), and a time-frequency resource used to transmit the uplink data is referred to as a data region (Data Region, DR). The target time-frequency resource GFAR includes the CR and the DR.

Because the control signal also needs to be demodulated, location information of the CR needs to be determined before the control signal is demodulated. A most basic manner is that the sequence sent by the terminal device determines information about the CR, such as a start location, bandwidth, and a quantity of timeslots, and if the transmission of the control signal supports frequency hopping, the sequence may further be used to indicate a corresponding frequency hopping mode. The control signal may indicate information about the DR, such as a start location, bandwidth, and a quantity of timeslots, and if the transmission of the data supports frequency hopping, the control message may further indicate a corresponding frequency hopping mode.

It should be understood that the uplink data herein refers to service data, and the control signal carries control information other than the uplink data. In this embodiment of this application, the control signal carries the information about the time-frequency resource of the uplink data, such as the start location, the bandwidth, and the quantity of timeslots. In addition, the control message may carry information such as a user identity (Identity, ID), a modulation and coding scheme (Modulation and Coding Scheme, MCS) of data, an interleaving scheme, and a spreading code. The control signal and the uplink data are separately encoded, and the control signal and a data signal may share a same channel or use different channels for transmission.

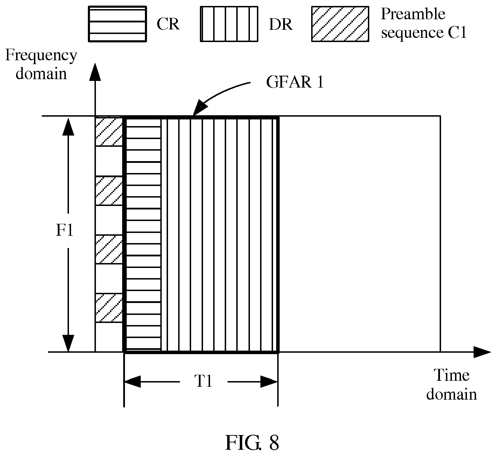

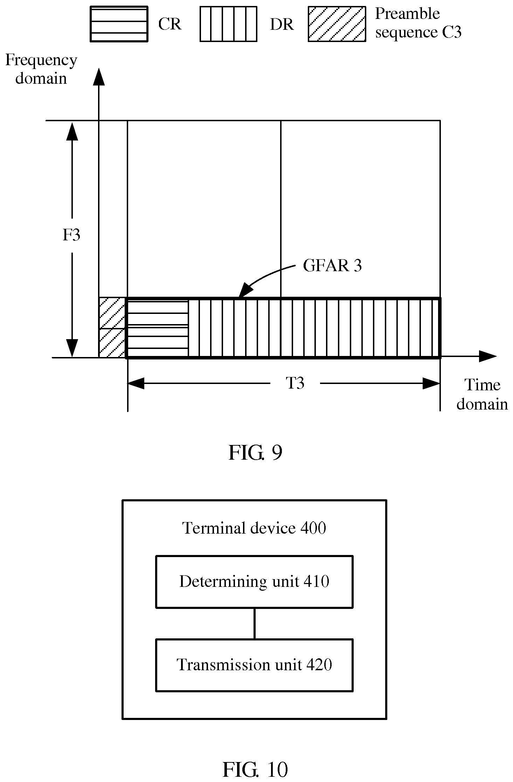

For example, as shown in FIG. 8 and FIG. 9 that are schematic diagrams of the time-frequency resource used for the grant-free transmission, the second location relationship is met between the time-frequency resource used to transmit the sequence and the time-frequency resource of the control signal, and the second location relationship is that: the time-frequency resource of the sequence is adjacent to the time-frequency resource of the control signal in time domain and is followed by the target time-frequency resource, and includes some frequency domain resources of the time-frequency resource of the control signal in frequency domain.

In FIG. 8 and FIG. 9, after determining the target time-frequency resource GFAR, the terminal device determines a corresponding preamble sequence based on the GFAR, sends the preamble sequence to the network device at a location of a time-frequency resource of the preamble sequence, and sends the control signal and the uplink data to the network device on the GFAR, where the terminal device sends the control signal to the network device in the CR in the GFAR, and sends the uplink data in the DR in the GFAR, and further, adds, to the control signal, the information about the time-frequency resource of the uplink data, such as the bandwidth, the quantity of timeslots, and the start location. Then, if the network device detects the preamble sequence on the time-frequency resource of the preamble sequence, the network device receives, on a CR corresponding to the preamble sequence based on the preamble sequence and the second location relationship between the preamble sequence and the CR, the control signal sent by the terminal device, and obtains, from the control signal, information about a DR used to receive the uplink data, so as to detect, on the DR, the uplink data sent by the terminal device.

It should be understood that determining the time-frequency resource of the control signal based on the time-frequency resource used by the terminal device to send the sequence is performed on a basis of the second location relationship that is met between the time-frequency resource of the sequence and the time-frequency resource of the control signal. However, to simplify the design during implementation, a part of the location information of the CR and the sequence may be agreed upon in advance. For example, it may be agreed that the time-frequency resource of the sequence is adjacent to the CR in time domain and is followed by the CR, bandwidth of the time-frequency resources of the sequence is the same as the bandwidth of the CR, and the quantity of timeslots of the CR is related to the bandwidth of the CR, that is, may be determined by the bandwidth of the CR. Then, the network device may directly determine the start location and the bandwidth of the CR based on a time-frequency resource of the detected preamble sequence, and determine the quantity of timeslots of the CR based on the bandwidth of the CR, and may further determine the start location, the bandwidth, and the quantity of timeslots of the DR in the control signal in the CR. If it is also agreed that the CR is adjacent to the DR, the start location and the quantity of timeslots of the CR directly determine the start location of the DR, and the control signal may not include the start location of the DR. If it is also agreed that the bandwidth of the CR and DR is the same, the control message does not need to carry bandwidth information of the DR. If transmission bandwidth of the DR includes only a possible quantity of timeslots of the DR, the control message does not need to indicate the quantity of timeslots of the DR. When data transmission supports the frequency hopping, the control message may also indicate the frequency hopping mode of the data transmission.

Because a specific location relationship is met between the time-frequency resource used to transmit the sequence and the time-frequency resource used to transmit the control signal, after receiving the sequence sent by the terminal device, the network device may directly determine, based on the time-frequency resource on which the sequence is received, the time-frequency resource used by the terminal device to transmit the control signal, and determine the resource used for the uplink grant-free transmission based on resource information carried in the control signal; that is, the sequence sent by the terminal device implicitly indicates the resource used for the uplink grant-free transmission, and no other signaling is required to indicate the resource, thereby reducing signaling overheads in the system.

In step 360, the network device detects uplink data sent by the terminal device on the target time-frequency resource.

In this embodiment of this application, the terminal device indicates, by using the sequence sent to the network device, the time-frequency resource used for the grant-free transmission, so that the network device may effectively determine, by using information about the sequence sent by the terminal device, a time-frequency resource used by the terminal device for the grant-free access. Because reuse of a plurality of grant-free transmission resources is supported, effective utilization of radio transmission resources is implemented, transmission resources are saved, and utilization of the time-frequency resource is improved. Further, a transmission process may be simplified, and complexity of a receiver is reduced.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

With reference to FIG. 10, the following describes a terminal device according to an embodiment of this application. Technical features described in the method embodiment are applicable to the following apparatus embodiment.

FIG. 10 shows a terminal device 400 according to this embodiment of this application. As shown in FIG. 10, the terminal device 400 includes a determining unit 410 and a transmission unit 420.

The determining unit 410 is configured to: determine, a target time-frequency resource used for grant-free transmission from a plurality of time-frequency resources; and determine, based on information about the target time-frequency resource and a correspondence between a time-frequency resource and a sequence, a sequence corresponding to the target time-frequency resource.

The transmission unit 420 is configured to perform the grant-free transmission with a network device on the target time-frequency resource based on the sequence corresponding to the target time-frequency resource.

Therefore, the terminal device indicates, to the network device by using a preamble sequence, a time-frequency resource currently used for grant-free access, so that the network device can effectively determine the time-frequency resource selected by the terminal device to perform the grant-free access. Because reuse of a plurality of grant-free transmission resources is supported, effective utilization of radio transmission resources is implemented, transmission resources are saved, and utilization of the time-frequency resource is improved. Further, a transmission process may be simplified, and complexity of a receiver is reduced.

Optionally, the determining unit 410 is specifically configured to determine, based on a size of to-be-sent uplink data or a loss status of a path between the terminal device and the network device, the target time-frequency resource used for the grant-free transmission from the plurality of time-frequency resources.

Optionally, the information about the target time-frequency resource includes at least one of the following information: a start location of the target time-frequency resource, a size of a frequency domain resource of the target time-frequency resource, a size of a time domain resource of the target time-frequency resource, or a frequency hopping mode of the terminal device.

Optionally, the transmission unit 420 is specifically configured to: send the sequence to the network device on a time-frequency resource used to send the sequence, and send uplink data to the network device on the target time-frequency resource.

Optionally, a first location relationship is met between the time-frequency resource of the sequence and the target time-frequency resource, and the first location relationship includes that: the time-frequency resource of the sequence is adjacent to the target time-frequency resource in time domain and is followed by the target time-frequency resource, and includes all or some frequency domain resources of the target time-frequency resource in frequency domain.

Optionally, the transmission unit 420 is specifically configured to: send the sequence to the network device on a time-frequency resource used to send the sequence, and send a control signal and uplink data to the network device on the target time-frequency resource, where the control signal includes information about a time-frequency resource used to transmit the uplink data.

Optionally, a second location relationship is met between the time-frequency resource of the sequence and a time-frequency resource used to transmit the control signal, and the second location relationship includes that: the time-frequency resource of the sequence is adjacent to the time-frequency resource of the control signal in time domain and is followed by the time-frequency resource of the control signal, and includes all or some frequency domain resources of the time-frequency resource of the control signal in frequency domain.

Optionally, the sequence includes a preamble sequence or a reference signal.

It should be understood that the terminal device 400 may be corresponding to the terminal device in the method embodiment, and may implement a corresponding function of the terminal device. For brevity, details are not described herein again.

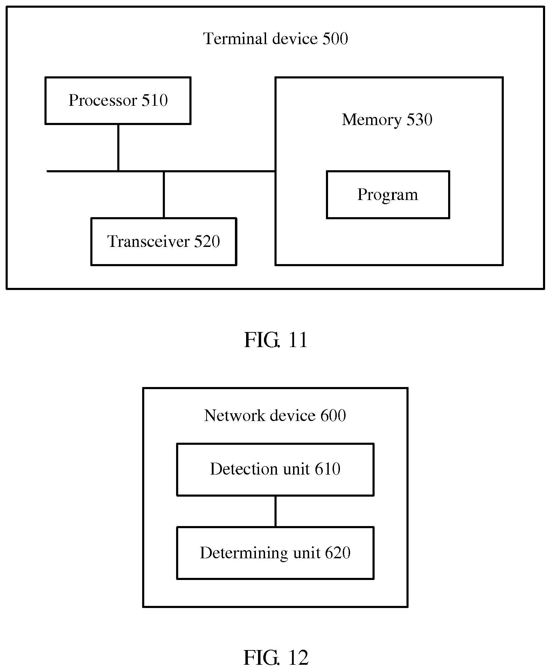

FIG. 11 is a schematic structural diagram of a terminal device 500 according to an embodiment of this application. As shown in FIG. 11, the terminal device 500 includes a processor 510, a transceiver 520, and a memory 530, where the processor 510, the transceiver 520, and the memory 530 communicate with each other by using an internal connection path. The memory 530 is configured to store an instruction. The processor 510 is configured to execute the instruction stored in the memory 530, to control the transceiver 520 to receive a signal or send a signal.

The processor 510 is configured to: determine a target time-frequency resource used for grant-free transmission from a plurality of time-frequency resources; and

determine, based on information about the target time-frequency resource and a correspondence between a time-frequency resource and a sequence, a sequence corresponding to the target time-frequency resource.

The transceiver 520 is configured to perform the grant-free transmission with a network device on the target time-frequency resource based on the sequence that is determined by the processor 510 and that is corresponding to the target time-frequency resource.

Therefore, the terminal device indicates, to the network device by using a preamble sequence, a time-frequency resource currently used for grant-free access, so that the network device can effectively determine the time-frequency resource selected by the terminal device to perform the grant-free access. Because reuse of a plurality of grant-free transmission resources is supported, effective utilization of radio transmission resources is implemented, transmission resources are saved, and utilization of the time-frequency resource is improved. Further, a transmission process may be simplified, and complexity of a receiver is reduced.

Optionally, the processor 510 is specifically configured to determine, based on a size of to-be-sent uplink data or a loss status of a path between the terminal device and the network device, the target time-frequency resource used for the grant-free transmission from the plurality of time-frequency resources.

Optionally, the information about the target time-frequency resource includes at least one of the following information: a start location of the target time-frequency resource, a size of a frequency domain resource of the target time-frequency resource, a size of a time domain resource of the target time-frequency resource, or a frequency hopping mode of the terminal device.

Optionally, the transceiver 520 is specifically configured to: send the sequence to the network device on a time-frequency resource used to send the sequence, and send uplink data to the network device on the target time-frequency resource.

Optionally, a first location relationship is met between the time-frequency resource of the sequence and the target time-frequency resource, and the first location relationship includes that: the time-frequency resource of the sequence is adjacent to the target time-frequency resource in time domain and is followed by the target time-frequency resource, and includes all or some frequency domain resources of the target time-frequency resource in frequency domain.

Optionally, the transceiver 520 is specifically configured to: send the sequence to the network device on a time-frequency resource used to send the sequence, and send a control signal and uplink data to the network device on the target time-frequency resource, where the control signal includes information about a time-frequency resource used to transmit the uplink data.

Optionally, a second location relationship is met between the time-frequency resource of the sequence and a time-frequency resource used to transmit the control signal, and the second location relationship includes that: the time-frequency resource of the sequence is adjacent to the time-frequency resource of the control signal in time domain and is followed by the time-frequency resource of the control signal, and includes all or some frequency domain resources of the time-frequency resource of the control signal in frequency domain.

Optionally, the sequence includes a preamble sequence or a reference signal.

It should be understood that the processor 510 in this embodiment of this application may be a central processing unit (Central Processing Unit, CPU), or the processor 510 may further be another general purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logical device, discrete gate or transistor logical device, discrete hardware component, or the like. The general purpose processor may be a microprocessor, or the processor may be any conventional processor or the like.

The memory 530 may include a read-only memory and a random access memory, and provide the processor 510 with an instruction and data. A part of the memory 530 may further include a non-volatile random access memory. For example, the memory 530 may further store information of a device type.

In an implementation process, steps in the foregoing methods may be implemented by using a hardware integrated logical circuit in the processor 510, or by using an instruction in a form of software. The steps of the positioning method disclosed with reference to the embodiments of this application may be directly performed by a hardware processor, or may be performed by using a combination of hardware in the processor 510 and a software module. The software module may be located in a mature storage medium in the art, such as a random access memory, a flash memory, a read-only memory, a programmable read-only memory, an electrically erasable programmable memory, a register, or the like. The storage medium is located in the memory 530, and the processor 510 reads information in the memory 530 and completes the steps in the foregoing methods in combination with hardware of the processor. To avoid repetition, details are not described herein again.

The terminal device 500 according to this embodiment of this application may be corresponding to the terminal device that is in the foregoing methods and that is configured to perform the methods shown in FIG. 3 to FIG. 8, and the terminal device 400 according to the embodiments of this application. In addition, units or modules in the terminal device 500 are separately configured to perform actions or processing processes performed by the terminal device in the methods shown in FIG. 3 to FIG. 8. To avoid repetition, detailed descriptions are omitted herein.

FIG. 12 shows a network device 600 according to an embodiment of this application. As shown in FIG. 12, the network device 600 includes a detection unit 610 and a determining unit 620.

The detection unit 610 is configured to detect a sequence sent by a terminal device.

The determining unit 620 is configured to determine, based on the sequence detected by the detection unit 610, information about a target time-frequency resource used for grant-free transmission.

The detection unit 610 is further configured to detect, on the target time-frequency resource determined by the determining unit 620, uplink data sent by the terminal device.

In this way, the network device can effectively determine a time-frequency resource used by the terminal device for grant-free access by using information about the sequence sent by the terminal device. Because reuse of a plurality of grant-free transmission resources is supported, effective utilization of radio transmission resources is implemented, transmission resources are saved, and utilization of the time-frequency resource is improved. Further, a transmission process may be simplified, and complexity of a receiver is reduced.

Optionally, the detection unit 610 is specifically configured to: before detecting the sequence sent by the terminal device, determine, based on signal power, whether the terminal device sends the sequence; and when determining that the terminal device sends the sequence, detect the sequence sent by the terminal device.

Optionally, the information about the target time-frequency resource includes at least one of the following information: a start location of the target time-frequency resource, a size of a frequency domain resource of the target time-frequency resource, a size of a time domain resource of the target time-frequency resource, or a frequency hopping mode of the terminal device.

Optionally, the determining unit 620 is specifically configured to determine the information about the target time-frequency resource based on the sequence and a correspondence between a sequence and a time-frequency resource.

Optionally, a first location relationship is met between a time-frequency resource used to transmit the sequence and the target time-frequency resource, and the first location relationship includes that: the time-frequency resource of the sequence is adjacent to the target time-frequency resource in time domain and is followed by the target time-frequency resource, and includes all or some frequency domain resources of the target time-frequency resource in frequency domain.

Optionally, the determining unit 620 is specifically configured to: determine, based on a time-frequency resource used to transmit the sequence, a time-frequency resource that is in the target time-frequency resource and that is used to transmit a control signal, and receive, on the time-frequency resource of the control signal, the control signal sent by the terminal device, where the control signal includes information about a time-frequency resource that is in the target time-frequency resource and that is used to transmit the uplink data; and determine, based on the control signal, the time-frequency resource that is in the target time-frequency resource and that is used to transmit the uplink data.

The detection unit 610 is specifically configured to detect, on the time-frequency resource that is in the target time-frequency resource and that is used to transmit the uplink data, the uplink data sent by the terminal device.

Optionally, a second location relationship is met between the time-frequency resource of the sequence and the time-frequency resource of the control signal, and the second location relationship includes that: the time-frequency resource of the sequence is adjacent to the time-frequency resource of the control signal in time domain and is followed by the time-frequency resource of the control signal, and includes all or some frequency domain resources of the time-frequency resource of the control signal in frequency domain.

Optionally, the sequence includes a preamble sequence or a reference signal.

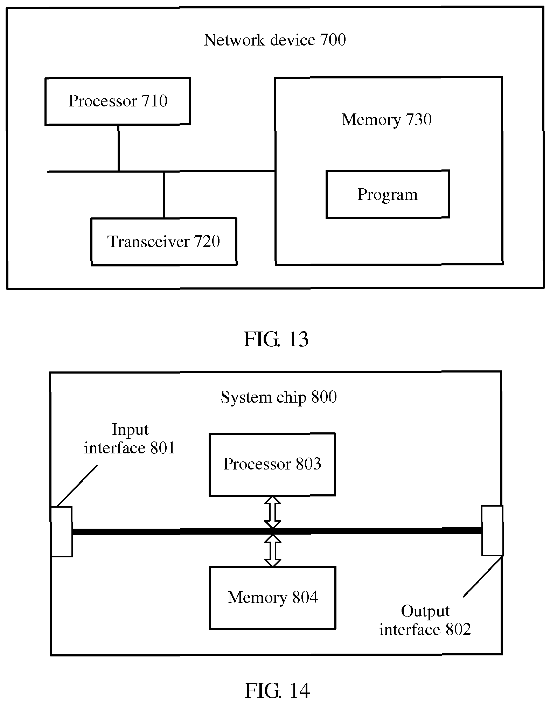

FIG. 13 is a schematic structural diagram of a network device 700 according to an embodiment of this application. As shown in FIG. 13, the network device 700 includes a processor 710, a transceiver 720, and a memory 730, where the processor 710, the transceiver 720, and the memory 730 communicate with each other by using an internal connection path. The memory 730 is configured to store an instruction. The processor 710 is configured to execute the instruction stored in the memory 730, to control the transceiver 720 to receive a signal or send a signal.

The processor 710 is configured to: detect a sequence sent by a terminal device; determine, based on the detected sequence, information about a target time-frequency resource used for grant-free transmission; and detect, on the target time-frequency resource, uplink data sent by the terminal device.

In this way, the network device can effectively determine a time-frequency resource used by the terminal device for grant-free access by using information about the sequence sent by the terminal device. Because reuse of a plurality of grant-free transmission resources is supported, effective utilization of radio transmission resources is implemented, transmission resources are saved, and utilization of the time-frequency resource is improved. Further, a transmission process may be simplified, and complexity of a receiver is reduced.

Optionally, the processor 710 is specifically configured to: before detecting the sequence sent by the terminal device, determine, based on signal power, whether the terminal device sends the sequence; and when determining that the terminal device sends the sequence, detect the sequence sent by the terminal device.

Optionally, the information about the target time-frequency resource includes at least one of the following information: a start location of the target time-frequency resource, a size of a frequency domain resource of the target time-frequency resource, a size of a time domain resource of the target time-frequency resource, or a frequency hopping mode of the terminal device.

Optionally, the processor 710 is specifically configured to determine the information about the target time-frequency resource based on the sequence and a correspondence between a sequence and a time-frequency resource.

Optionally, a first location relationship is met between a time-frequency resource used to transmit the sequence and the target time-frequency resource, and the first location relationship includes that: the time-frequency resource of the sequence is adjacent to the target time-frequency resource in time domain and is followed by the target time-frequency resource, and includes all or some frequency domain resources of the target time-frequency resource in frequency domain.

Optionally, the processor 710 is specifically configured to: determine, based on a time-frequency resource used to transmit the sequence, a time-frequency resource that is in the target time-frequency resource and that is used to transmit a control signal, and receive, on the time-frequency resource of the control signal, the control signal sent by the terminal device, where the control signal includes information about a time-frequency resource that is in the target time-frequency resource and that is used to transmit the uplink data; and determine, based on the control signal, the time-frequency resource that is in the target time-frequency resource and that is used to transmit the uplink data.

The processor 710 is specifically configured to detect, on the time-frequency resource that is in the target time-frequency resource and that is used to transmit the uplink data, the uplink data sent by the terminal device.

Optionally, a second location relationship is met between the time-frequency resource of the sequence and the time-frequency resource of the control signal, and the second location relationship includes that: the time-frequency resource of the sequence is adjacent to the time-frequency resource of the control signal in time domain and is followed by the time-frequency resource of the control signal, and includes all or some frequency domain resources of the time-frequency resource of the control signal in frequency domain.

Optionally, the sequence includes a preamble sequence or a reference signal.

It should be understood that the processor 710 in this embodiment of this application may be a central processing unit (Central Processing Unit, CPU), the processor 710 may further be another general purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logical device, discrete gate or transistor logical device, discrete hardware component, or the like. The general purpose processor may be a microprocessor, or the processor may be any conventional processor or the like.

The memory 730 may include a read-only memory and a random access memory, and provide the processor 710 with an instruction and data. A part of the memory 730 may further include a non-volatile random access memory. For example, the memory 730 may further store information of a device type.

In an implementation process, steps in the foregoing methods may be implemented by using a hardware integrated logical circuit in the processor 710, or by using an instruction in a form of software. The steps of the positioning method disclosed with reference to the embodiments of this application may be directly performed by a hardware processor, or may be performed by using a combination of hardware in the processor 710 and a software module. The software module may be located in a mature storage medium in the art, such as a random access memory, a flash memory, a read-only memory, a programmable read-only memory, an electrically erasable programmable memory, a register, or the like. The storage medium is located in the memory 730, and the processor 710 reads information in the memory 730 and completes the steps in the foregoing methods in combination with hardware of the processor. To avoid repetition, details are not described herein again.

The network device 700 according to this embodiment of this application may be corresponding to the network device that is in the foregoing methods and that is configured to perform the methods shown in FIG. 3 to FIG. 8, and the network device 600 according to the embodiments of this application. In addition, units or modules in the network device 700 are separately configured to perform actions or processing processes performed by the network device in the methods shown in FIG. 3 to FIG. 8. To avoid repetition, detailed descriptions are omitted herein.

FIG. 14 is a schematic structural diagram of a system chip according to an embodiment of this application. A system chip 800 in FIG. 14 includes an input interface 801, an output interface 802, at least one processor 803, and a memory 804. The input interface 801, the output interface 802, the processor 803, and the memory 804 are connected to each other by using a bus 805. The processor 803 is configured to execute code in the memory 804.

Optionally, when the code is executed, the processor 803 may implement the method performed by the terminal device in the method embodiment. For brevity, details are not described herein again.

Optionally, when the code is executed, the processor 803 may implement the method performed by the network device in the method embodiment. For brevity, details are not described herein again.

It may be clearly understood by a person skilled in the art that, for the purpose of convenient and brief description, for detailed working processes of the foregoing system, apparatus, and unit, reference may be made to a corresponding process in the foregoing method embodiment, and details are not described herein again.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing system, apparatus, and unit, reference may be made to a corresponding process in the foregoing method embodiment, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units may be integrated into one unit.

When the functions are implemented in the form of a software function unit and sold or used as an independent product, the functions may be stored in a computer readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or a compact disc.

The foregoing descriptions are merely specific implementations of this application, but are not intended to limit the protection scope of this application, which is defined by the appended claims.

## Claims

1. A grant-free transmission method, wherein the method comprises:

    determining (310), by a terminal device, a target time-frequency resource used for grant-free transmission from a plurality of time-frequency resources;
    determining (320), by the terminal device based on information about the target time-frequency resource and a correspondence between a time-frequency resource and a sequence, a sequence corresponding to the target time-frequency resource; and
    performing (330), by the terminal device, the grant-free transmission with a network device on the target time-frequency resource based on the sequence corresponding to the target time-frequency resource;
    wherein the performing (330), by the terminal device, the grant-free transmission with a network device on the target time-frequency resource based on the sequence corresponding to the target time-frequency resource comprises:
    sending, by the terminal device, the sequence to the network device on a time-frequency resource used to send the sequence, and sending a control signal and uplink data to the network device on the target time-frequency resource, wherein the control signal comprises information about a time-frequency resource used to transmit the uplink data.

2. The method according to claim 1, wherein the determining, by a terminal device, a target time-frequency resource used for grant-free transmission from a plurality of time-frequency resources comprises:
   determining, by the terminal device based on a size of to-be-sent uplink data or a loss status of a path between the terminal device and the network device, the target time-frequency resource used for the grant-free transmission from the plurality of time-frequency resources.

3. The method according to claim 1 or 2, wherein the information about the target time-frequency resource comprises at least one of the following information:
   a start location of the target time-frequency resource, a size of a frequency domain resource of the target time-frequency resource, a size of a time domain resource of the target time-frequency resource, and a frequency hopping mode of the terminal device.

4. The method according to any one of claims 1 to 3, wherein the performing (330), by the terminal device, the grant-free transmission with a network device on the target time-frequency resource based on the sequence corresponding to the target time-frequency resource comprises:
   sending, by the terminal device, the sequence to the network device on a time-frequency resource used to send the sequence, and sending uplink data to the network device on the target time-frequency resource.

5. The method according to claim 4, wherein a first location relationship is met between the time-frequency resource of the sequence and the target time-frequency resource, and the first location relationship comprises that:
   the time-frequency resource of the sequence is adjacent to the target time-frequency resource in time domain and is followed by the target time-frequency resource, and comprises all or some frequency domain resources of the target time-frequency resource in frequency domain.

6. A grant-free transmission method, wherein the method comprises:

    detecting (340), by a network device, a sequence sent by a terminal device;

determining (350), by the network device based on the detected sequence, information about a target time-frequency resource used for grant-free transmission; and

detecting (360), by the network device on the target time-frequency resource, uplink data sent by the terminal device;

wherein the determining (350), by the network device based on the detected sequence, information about a target time-frequency resource used for grant-free transmission comprises:

> determining, by the network device based on a time-frequency resource used to transmit the sequence, a time-frequency resource that is in the target time-frequency resource and that is used to transmit a control signal, and receiving, on the time-frequency resource of the control signal, the control signal sent by the terminal device, wherein the control signal comprises information about a time-frequency resource that is in the target time-frequency resource and that is used to transmit the uplink data; and
>
> determining, by the network device based on the control signal, the time-frequency resource that is in the target time-frequency resource and that is used to transmit the uplink data; and
>
> the detecting, by the network device on the target time-frequency resource, uplink data sent by the terminal device comprises:
>
> detecting, by the network device on the time-frequency resource that is in the target time-frequency resource and that is used to transmit the uplink data, the uplink data sent by the terminal device.

7. The method according to claim 6, wherein before the detecting (340), by a network device, a sequence sent by a terminal device, the method further comprises:
   determining, by the network device based on signal power, whether the terminal device sends the sequence; and when determining that the terminal device sends the sequence, detecting the sequence sent by the terminal device.

8. The method according to claim 6 or 7, wherein the information about the target time-frequency resource comprises at least one of the following information:
   a start location of the target time-frequency resource, a size of a frequency domain resource of the target time-frequency resource, a size of a time domain resource of the target time-frequency resource, and a frequency hopping mode of the terminal device.

9. The method according to any one of claims 6 to 8, wherein the determining (350), by the network device based on the detected sequence, information about a target time-frequency resource used for grant-free transmission comprises:
   determining, by the network device, the information about the target time-frequency resource based on the sequence and a correspondence between a sequence and a time-frequency resource.

10. A terminal device (400), wherein the terminal device comprises:

    a determining unit (410), configured to determine a target time-frequency resource used for grant-free transmission from a plurality of time-frequency resources, wherein
    the determining unit is further configured to determine, based on information about the target time-frequency resource and a correspondence between a time-frequency resource and a sequence, a sequence corresponding to the target time-frequency resource; and
    a transmission unit (420), configured to perform the grant-free transmission with a network device on the target time-frequency resource based on the sequence that is determined by the determining unit and that is corresponding to the target time-frequency resource;
    wherein the transmission unit is specifically configured to:
    send the sequence to the network device on a time-frequency resource used to send the sequence, and send a control signal and uplink data to the network device on the target time-frequency resource, wherein the control signal comprises information about a time-frequency resource used to transmit the uplink data.

11. The terminal device according to claim 10, configured to implement the method in accordance with any of claims 1 to 5.

12. A network device (500), wherein the network device comprises:

    a detection unit (510), configured to detect a sequence sent by a terminal device; and
    a determining unit (520), configured to determine, based on the sequence detected by the detection unit, information about a target time-frequency resource used for grant-free transmission, wherein
    the detection unit (510) is further configured to detect, on the target time-frequency resource determined by the determining unit (520), uplink data sent by the terminal device;
    wherein the determining unit is specifically configured to:

determine, based on a time-frequency resource used to transmit the sequence, a time-frequency resource that is in the target time-frequency resource and that is used to transmit a control signal, and receive, on the time-frequency resource of the control signal, the control signal sent by the terminal device, wherein the control signal comprises information about a time-frequency resource that is in the target time-frequency resource and that is used to transmit the uplink data; and

determine, based on the control signal, the time-frequency resource that is in the target time-frequency resource and that is used to transmit the uplink data, wherein

the detection unit is specifically configured to:

detect, on the time-frequency resource that is in the target time-frequency resource and that is used to transmit the uplink data, the uplink data sent by the terminal device.

13. The network device (500) according to claim 12, configured to implement the method in accordance with any of claims 6 to 9.

**Patentansprüche**

1. Erteilungsfreies Übertragungsverfahren, wobei das Verfahren Folgendes umfasst:

Bestimmen (310), durch ein Endgerät, einer Ziel-Zeit-Frequenz-Ressource, die für eine erteilungsfreie Übertragung von mehreren Zeit-Frequenz-Ressourcen verwendet wird;
Bestimmen (320), durch das Endgerät, basierend auf Informationen über die Ziel-Zeit-Frequenz-Ressource und einer Entsprechung zwischen einer Zeit-Frequenz-Ressource und einer Sequenz, einer Sequenz, die der Ziel-Zeit-Frequenz-Ressource entspricht; und
Durchführen (330), durch das Endgerät, der erteilungsfreien Übertragung mit einer Netzwerkvorrichtung auf der Ziel-Zeit-Frequenz-Ressource basierend auf der Sequenz, die der Ziel-Zeit-Frequenz-Ressource entspricht;
wobei das Durchführen (330), durch das Endgerät, der erteilungsfreien Übertragung mit einer Netzwerkvorrichtung auf der Ziel-Zeit-Frequenz-Ressource basierend auf der Sequenz, die der Ziel-Zeit-Frequenz-Ressource entspricht, Folgendes umfasst:
Senden, durch das Endgerät, der Sequenz an die Netzwerkvorrichtung auf einer Zeit-Frequenz-Ressource, die verwendet wird, um die Sequenz zu senden, und Senden eines Steuersignals und von Uplink-Daten an die Netzwerkvorrichtung auf der Ziel-Zeit-Frequenz-Ressource, wobei das Steuersignal Informationen über eine Zeit-Frequenz-Ressource umfasst, die verwendet werden, um Uplink-Daten zu übertragen.

2. Verfahren nach Anspruch 1, wobei das Bestimmen, durch ein Endgerät, einer Ziel-Zeit-Frequenz-Ressource, die für die erteilungsfreie Übertragung von mehreren Zeit-Frequenz-Ressourcen verwendet wird, Folgendes umfasst:
Bestimmen, durch das Endgerät, basierend auf einer Größe von zu sendenden Uplink-Daten oder einem Verluststatus eines Pfads zwischen dem Endgerät und der Netzwerkvorrichtung, der Ziel-Zeit-Frequenz-Ressource, die für die erteilungsfreie Übertragung von den mehreren Zeit-Frequenz-Ressourcen verwendet wird.

3. Verfahren nach Anspruch 1 oder 2, wobei die Informationen über die Ziel-Zeit-Frequenz-Ressource die folgenden Informationen umfassen:
einen Startort der Ziel-Zeit-Frequenz-Ressource, eine Größe einer Frequenzbereichsressource der Ziel-Zeit-Frequenz-Ressource, eine Größe einer Zeitbereichsressource der Ziel-Zeit-Frequenz-Ressource und/oder einen Frequenzsprungmodus des Endgeräts.

4. Verfahren nach einem der Ansprüche 1 bis 3, wobei das Durchführen (330), durch das Endgerät, der erteilungsfreien Übertragung mit einer Netzwerkvorrichtung auf der Ziel-Zeit-Frequenz-Ressource basierend auf der Sequenz, die der Ziel-Zeit-Frequenz-Ressource entspricht, Folgendes umfasst:
Senden, durch das Endgerät, der Sequenz an die Netzwerkvorrichtung auf einer Zeit-Frequenz-Ressource, die verwendet wird, um die Sequenz zu senden, und Senden von Uplink-Daten an die Netzwerkvorrichtung auf der Ziel-Zeit-Frequenz-Ressource.

5. Verfahren nach Anspruch 4, wobei eine erste Ortsbeziehung zwischen der Zeit-Frequenz-Ressource der Sequenz und der Ziel-Zeit-Frequenz-Ressource erfüllt ist und die erste Ortsbeziehung umfasst, dass:
die Zeit-Frequenz-Ressource der Sequenz angrenzend an die Ziel-Zeit-Frequenz-Ressource in einem Zeitbereich ist und von der Ziel-Zeit-Frequenz-Ressource gefolgt wird und alle oder einige Frequenzbereichsressourcen der Ziel-Zeit-Frequenz-Ressource in dem Frequenzbereich umfasst.

6. Erteilungsfreies Übertragungsverfahren, wobei das Verfahren Folgendes umfasst:

Erfassen (340), durch eine Netzwerkvorrichtung, einer Sequenz, die durch ein Endgerät gesendet wird;

Bestimmen (350), durch die Netzwerkvorrichtung, basierend auf der erfassten Sequenz, von Informationen über eine Ziel-Zeit-Frequenz-Ressource, die für die erteilungsfreie Übertragung verwendet wird; und

Erfassen (360), durch die Netzwerkvorrichtung, auf der Ziel-Zeit-Frequenz-Ressource, von Uplink-Daten, die durch das Endgerät gesendet werden;

wobei das Bestimmen (350), durch die Netzwerkvorrichtung, basierend auf der erfassten Sequenz, von Informationen über eine Ziel-Zeit-Frequenz-Ressource, die für die erteilungsfreie Übertragung verwendet wird, Folgendes umfasst:

Bestimmen, durch die Netzwerkvorrichtung, basierend auf einer Zeit-Frequenz-Ressource, die verwendet wird, um die Sequenz zu übertragen, einer Zeit-Frequenz-Ressource, die sich in der Ziel-Zeit-Frequenz-Ressource befindet und die verwendet wird, um ein Steuersignal zu übertragen, und Empfangen, auf der Zeit-Frequenz-Ressource des Steuersignals, des Steuersignals, das durch das Endgerät gesendet wird, wobei das Steuersignal Informationen über eine Zeit-Frequenz-Ressource umfasst, die sich in der Ziel-Zeit-Frequenz-Ressource befindet und die verwendet wird, um die Uplink-Daten zu übertragen; und

Bestimmen, durch die Netzwerkvorrichtung, basierend auf dem Steuersignal, der Zeit-Frequenz-Ressource, die sich in der Ziel-Zeit-Frequenz-Ressource befindet und die verwendet wird, um die Uplink-Daten zu übertragen; und

das Erfassen, durch die Netzwerkvorrichtung, auf der Ziel-Zeit-Frequenz-Ressource, von Uplink-Daten, die durch das Endgerät gesendet werden, Folgendes umfasst:

Erfassen, durch die Netzwerkvorrichtung, auf der Zeit-Frequenz-Ressource, die sich in der Ziel-Zeit-Frequenz-Ressource befindet und die verwendet wird, um die Uplink-Daten zu übertragen, der Uplink-Daten, die durch das Endgerät gesendet werden.

7. Verfahren nach Anspruch 6, wobei vor dem Erfassen (340), durch eine Netzwerkvorrichtung, einer Sequenz, die durch das Endgerät gesendet wird, das Verfahren ferner Folgendes umfasst:
Bestimmen, durch die Netzwerkvorrichtung, basierend auf einer Signalleistung, ob das Endgerät die Sequenz sendet; und wenn bestimmt wird, dass das Endgerät die Sequenz sendet, Erfassen der Sequenz, die durch das Endgerät gesendet wird.

8. Verfahren nach Anspruch 6 oder 7, wobei die Informationen über die Ziel-Zeit-Frequenz-Ressource die folgenden Informationen umfassen:
einen Startort der Ziel-Zeit-Frequenz-Ressource, eine Größe einer Frequenzbereichsressource der Ziel-Zeit-Frequenz-Ressource, eine Größe einer Zeitbereichsressource der Ziel-Zeit-Frequenz-Ressource und/oder einen Frequenzsprungmodus des Endgeräts.

9. Verfahren nach einem der Ansprüche 6 bis 8, wobei das Bestimmen (350), durch die Netzwerkvorrichtung, basierend auf der erfassten Sequenz, von Informationen über eine Ziel-Zeit-Frequenz-Ressource, die für die erteilungsfreie Übertragung verwendet wird, Folgendes umfasst:
Bestimmen, durch die Netzwerkvorrichtung, der Informationen über die Ziel-Zeit-Frequenz-Ressource basierend auf der Sequenz und einer Entsprechung zwischen einer Sequenz und einer Zeit-Frequenz-Ressource.

10. Endgerät (400), wobei das Endgerät Folgendes umfasst:

eine Bestimmungseinheit (410), die konfiguriert ist, um eine Ziel-Zeit-Frequenz-Ressource zu bestimmen, die für die erteilungsfreie Übertragung von mehreren Zeit-Frequenz-Ressourcen verwendet wird, wobei
die Bestimmungseinheit ferner konfiguriert ist, um basierend auf Informationen über die Ziel-Zeit-Frequenz-Ressource und einer Entsprechung zwischen einer Zeit-Frequenz-Ressource und einer Sequenz, eine Sequenz zu bestimmen, die der Ziel-Zeit-Frequenz-Ressource entspricht; und
eine Übertragungseinheit (420), die konfiguriert ist, um die erteilungsfreie Übertragung mit einer Netzwerkvorrichtung auf der Ziel-Zeit-Frequenz-Ressource basierend auf der Sequenz durchzuführen, die durch die Bestimmungseinheit bestimmt wird und die der Ziel-Zeit-Frequenz-Ressource entspricht;
wobei die Bestimmungseinheit speziell zu Folgendem konfiguriert ist:
Senden der Sequenz an die Netzwerkvorrichtung auf einer Zeit-Frequenz-Ressource, die verwendet wird, um die Sequenz zu senden, und Senden eines Steuersignals und von Uplink-Daten an die Netzwerkvorrichtung auf der Ziel-Zeit-Frequenz-Ressource, wobei das Steuersignal Informationen über eine Zeit-Frequenz-Ressource umfasst, die verwendet wird, um Uplink-Daten zu übertragen.

11. Endgerät nach Anspruch 10, das konfiguriert ist, um das Verfahren nach einem der Ansprüche 1 bis 5 zu implementieren.

12. Netzwerkvorrichtung (500), wobei die Netzwerkvorrichtung Folgendes umfasst:

eine Erfassungseinheit (510), die konfiguriert ist, um eine Sequenz zu erfassen, die durch ein Endgerät gesendet wird; und
eine Bestimmungseinheit (520), die konfiguriert ist, um basierend auf der Sequenz, die durch die Erfassungseinheit erfasst wird, Informationen über eine Ziel-Zeit-Frequenz-Ressource zu bestimmen, die für die erteilungsfreie Übertragung verwendet wird, wobei
die Erfassungseinheit (510) ferner konfiguriert ist, um auf der Ziel-Zeit-Frequenz-Ressource, die durch die Bestimmungseinheit (520) bestimmt wird, Uplink-Daten zu erfassen, die durch das Endgerät gesendet werden;
wobei die Bestimmungseinheit speziell zu Folgendem konfiguriert ist:

Bestimmen, basierend auf einer Zeit-Frequenz-Ressource, die verwendet wird, um die Sequenz zu übertragen, einer Zeit-Frequenz-Ressource, die sich in der Ziel-Zeit-Frequenz-Ressource befindet und die verwendet wird, um ein Steuersignal zu übertragen, und Empfangen, auf der Zeit-Frequenz-Ressource des Steuersignals, des Steuersignals, das durch das Endgerät gesendet wird, wobei das Steuersignal Informationen über eine Zeit-Frequenz-Ressource umfasst, die sich in der Ziel-Zeit-Frequenz-Ressource befindet und die verwendet wird, um die Uplink-Daten zu übertragen; und
Bestimmen, basierend auf dem Steuersignal, der Zeit-Frequenz-Ressource, die sich in der Ziel-Zeit-Frequenz-Ressource befindet und die verwendet wird, um Uplink-Daten zu übertragen, wobei
die Erfassungseinheit speziell zu Folgendem konfiguriert ist:
Erfassen, auf der Zeit-Frequenz-Ressource die sich in der Ziel-Zeit-Frequenz-Ressource befindet, und die verwendet wird, um Uplink-Daten zu übertragen, der Uplink-Daten die durch das Endgerät gesendet werden.

13. Netzwerkvorrichtung (500) nach Anspruch 12, die konfiguriert ist, um das Verfahren nach einem der Ansprüche 6 bis 9 zu implementieren.

**Revendications**

1. Procédé de transmission de données sans autorisation, le procédé comprenant :

la détermination (310), par un dispositif terminal, d'une ressource temps-fréquence cible utilisée pour une transmission sans autorisation parmi une pluralité de ressources temps-fréquence ;
la détermination (320), par le dispositif terminal en fonction d'informations concernant la ressource temps-fréquence cible et d'une correspondance entre une ressource temps-fréquence et une séquence, une séquence correspondant à la ressource temps-fréquence cible ; et
la réalisation (330), par le dispositif terminal, de la transmission sans autorisation avec un dispositif réseau sur la ressource temps-fréquence cible en fonction de la séquence correspondant à la ressource temps-fréquence cible ;
la réalisation (330), par le dispositif terminal, de la transmission sans autorisation avec un dispositif réseau sur la ressource temps-fréquence cible en fonction de la séquence correspondant à la ressource temps-fréquence cible comprenant :
l'envoi, par le dispositif terminal, de la séquence au dispositif réseau sur une ressource temps-fréquence utilisée pour envoyer la séquence, et l'envoi d'un signal de commande et de données de liaison montante au dispositif réseau sur la ressource temps-fréquence cible, le signal de commande comprenant des informations concernant une ressource temps-fréquence utilisée pour transmettre les données de liaison montante.

2. Procédé selon la revendication 1, la détermination, par un dispositif terminal, d'une ressource temps-fréquence cible utilisée pour une transmission sans autorisation parmi une pluralité de ressources temps-fréquence comprenant :
la détermination, par le dispositif terminal en fonction d'une taille de données de liaison montante à envoyer ou d'un état d'affaiblissement sur un trajet de propagation entre le dispositif terminal et le dispositif réseau, de la ressource temps-fréquence cible utilisée pour la transmission sans autorisation parmi la pluralité de ressources temps-fréquence.

3. Procédé selon la revendication 1 ou 2, les informations concernant la ressource temps-fréquence cible comprenant :
un emplacement de départ de la ressource temps-fréquence cible, et/ou une taille d'une ressource de domaine fréquentiel de la ressource temps-fréquence cible, et/ou une taille d'une ressource de domaine temporel de la ressource temps-fréquence cible et/ou un mode de saut de fréquence du dispositif terminal.

4.  Procédé selon l'une quelconque des revendications 1 à 3, la réalisation (330), par le dispositif terminal, de la transmission sans autorisation avec un dispositif réseau sur la ressource temps-fréquence cible en fonction de la séquence correspondant à la ressource temps-fréquence cible comprenant :
    l'envoi, par le dispositif terminal, de la séquence au dispositif réseau sur une ressource temps-fréquence utilisée pour envoyer la séquence, et l'envoi de données de liaison montante au dispositif réseau sur la ressource temps-fréquence cible.

5.  Procédé selon la revendication 4, une première relation d'emplacements étant satisfaite entre la ressource temps-fréquence de la séquence et la ressource temps-fréquence cible, et la première relation d'emplacements comprenant le fait que :
    la ressource temps-fréquence de la séquence est adjacente à la ressource temps-fréquence cible dans le domaine temporel et est suivie de la ressource temps-fréquence cible, et comprend l'ensemble ou une partie des ressources de domaine fréquentiel de la ressource temps-fréquence cible dans le domaine fréquentiel.

6.  Procédé de transmission de données sans autorisation, le procédé comprenant :

    la détection (340), par un dispositif réseau, d'une séquence envoyée par un dispositif terminal ;
    la détermination (350), par le dispositif réseau en fonction de la séquence détectée, d'informations concernant une ressource temps-fréquence cible utilisée pour une transmission sans autorisation ; et
    la détection (360), par le dispositif réseau sur la ressource temps-fréquence cible, de données de liaison montante envoyées par le dispositif terminal ;
    la détermination (350), par le dispositif réseau en fonction de la séquence détectée, d'informations concernant une ressource temps-fréquence cible utilisée pour une transmission sans autorisation comprenant :

        la détermination, par le dispositif réseau en fonction d'une ressource temps-fréquence utilisée pour transmettre la séquence, d'une ressource temps-fréquence qui se trouve dans la ressource temps-fréquence cible et qui est utilisée pour émettre un signal de commande, et la réception, en fonction de la ressource temps-fréquence du signal de commande, du signal de commande envoyé par le dispositif terminal, le signal de commande comprenant des informations concernant une ressource temps-fréquence qui se trouve dans la ressource temps-fréquence cible et qui est utilisée pour transmettre les données de liaison montante ; et
la détermination, par le dispositif réseau en fonction du signal de commande, de la ressource temps-fréquence qui se trouve dans la ressource temps-fréquence cible et qui est utilisée pour transmettre les données de liaison montante ; et
la détection, par le dispositif réseau sur la ressource temps-fréquence cible, de données de liaison montante envoyées par le dispositif terminal comprenant :
la détection, par le dispositif réseau sur la ressource temps-fréquence qui se trouve dans la ressource temps-fréquence cible et qui est utilisée pour transmettre les données de liaison montante, des données de liaison montante envoyées par le dispositif terminal.

7.  Procédé selon la revendication 6, le procédé comprenant en outre, avant la détection (340), par un dispositif réseau, d'une séquence envoyée par un premier dispositif terminal :

    la détermination, par le dispositif réseau en fonction de la puissance du signal, du fait de savoir si le dispositif terminal envoie la séquence ; et lorsqu'il est déterminé
    que le dispositif terminal envoie la séquence, la détection de la séquence envoyée par le dispositif terminal.

8.  Procédé selon la revendication 6 ou 7, les informations concernant la ressource temps-fréquence cible comprenant :
    un emplacement de départ de la ressource temps-fréquence cible, et/ou une taille d'une ressource de domaine fréquentiel de la ressource temps-fréquence cible, et/ou une taille d'une ressource de domaine temporel de la ressource temps-fréquence cible et/ou un mode de saut de fréquence du dispositif terminal.

9.  Procédé selon l'une quelconque des revendications 6 à 8, la détermination (350), par le dispositif réseau en fonction de la séquence détectée, d'informations concernant une ressource temps-fréquence cible utilisée pour une transmission sans autorisation comprenant :
    la détermination, par le dispositif réseau, des informations concernant la ressource temps-fréquence cible en fonction de la séquence et d'une correspondance entre une séquence et une ressource temps-fréquence.

10. Dispositif terminal (400), le dispositif terminal comprenant :

une unité de détermination (410), configurée pour déterminer une ressource temps-fréquence cible utilisée pour une transmission sans autorisation parmi une pluralité de ressources temps-fréquence, l'unité de détermination étant en outre configurée pour déterminer, en fonction d'informations concernant la fréquence temps-fréquence cible et d'une correspondance entre une ressource temps-fréquence et une séquence, une séquence correspondant à la ressource temps-fréquence cible ; et

une unité de transmission (420), configurée pour réaliser la transmission sans autorisation avec un dispositif réseau sur la ressource temps-fréquence cible en fonction de la séquence qui est déterminée par l'unité de détermination et qui correspond à la ressource temps-fréquence cible ;

l'unité de détermination étant spécifiquement configurée pour :

envoyer la séquence au dispositif réseau sur une ressource temps-fréquence utilisée pour envoyer la séquence, et envoyer un signal de commande et des données de liaison montante au dispositif réseau sur la ressource temps-fréquence cible, le signal de commande comprenant des informations concernant une ressource temps-fréquence utilisée pour transmettre les données de liaison montante.

11. Dispositif terminal selon la revendication 10, configuré pour mettre en œuvre le procédé selon l'une quelconque des revendications 1 à 5.

12. Dispositif réseau (500), le dispositif réseau comprenant :

une unité de détection (510), configurée pour détecter une séquence envoyée par un dispositif terminal ; et

une unité de détermination (520), configurée pour déterminer, en fonction de la séquence détectée par l'unité de détection, des informations concernant une ressource temps-fréquence cible utilisée pour une transmission sans autorisation, l'unité de détection (510) étant en outre configurée pour détecter, sur la ressource temps-fréquence cible déterminée par l'unité de détermination (520), des données de liaison montante envoyées par le dispositif terminal ;

l'unité de détermination étant spécifiquement configurée pour :

déterminer, en fonction d'une ressource temps-fréquence utilisée pour transmettre la séquence, une ressource temps-fréquence qui se trouve dans la ressource temps-fréquence cible et qui est utilisée pour émettre un signal de commande et recevoir, sur la ressource temps-fréquence du signal de commande, le signal de commande envoyé par le dispositif terminal, le signal de commande comprenant des informations concernant une ressource temps-fréquence qui se trouve dans la ressource temps-fréquence cible et qui est utilisée pour transmettre les données de liaison montante ; et

déterminer, en fonction du signal de commande, la ressource temps-fréquence qui se trouve dans la ressource temps-fréquence cible et qui est utilisée pour transmettre les données de liaison montante, l'unité de détection étant spécifiquement configurée pour :

détecter, sur la ressource temps-fréquence qui se trouve dans la ressource temps-fréquence cible et qui est utilisée pour transmettre les données de liaison montante, les données de liaison montante envoyées par le dispositif terminal.

13. Dispositif réseau (500) selon la revendication 12, configuré pour mettre en oeuvre le procédé selon l'une quelconque des revendications 6 à 9.

FIG. 1

FIG. 2

```
┌──────────────┐                                    ┌──────────────┐
│   Terminal   │                                    │   Network    │
│    device    │                                    │    device    │
└──────┬───────┘                                    └──────┬───────┘
       │                                                   │
┌──────┴───────────────┐                                   │
│ 310. Determine a target                                  │
│ time-frequency resource                                  │
└──────┬───────────────┘                                   │
       │                                                   │
┌──────┴───────────────┐                                   │
│ 320. Determine a sequence                                │
│ corresponding to the target                              │
│ time-frequency resource                                  │
└──────┬───────────────┘                                   │
       │                                                   │
       │   330. Perform grant-free transmission            │
       │         on the target time-frequency              │
       │      resource based on the sequence               │
       │─────────────────────────────────────────────────▶│
       │                                         ┌──────────┴───────────┐
       │                                         │ 340. Detect the sequence
       │                                         └──────────┬───────────┘
       │                                         ┌──────────┴───────────┐
       │                                         │ 350. Determine the target
       │                                         │ time-frequency resource based
       │                                         │ on the detected sequence
       │                                         └──────────┬───────────┘
       │                                         ┌──────────┴───────────┐
       │                                         │ 360. Detect uplink data on the
       │                                         │ target time-frequency resource
       │                                         └──────────┬───────────┘
       │                                                   │
```

FIG. 3

FIG. 4

FIG. 5

FIG. 6

EP 3 554 118 B1

FIG. 7

FIG. 8

FIG. 9

FIG. 10

Terminal device 500

Processor 510

Memory 530

Program

Transceiver 520

FIG. 11

Network device 600

Detection unit 610

Determining unit 620

FIG. 12

Network device 700

Processor 710

Transceiver 720

Memory 730

Program

FIG. 13

System chip 800

Input
interface 801

Processor 803

Memory 804

Output
interface 802

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710019826

- EP 2398294 A2

**Non-patent literature cited in the description**

- **NOKIA ; ALCATEL-LUCENT ; SHANGHAI BELL.** *Channel structure for contention based access*

- **INTEL CORP.** *Grant-free UL transmissions in NR*